# EUROPEAN PATENT SPECIFICATION

(11) **EP 3 264 882 B1**
(45) Date of publication and mention of the grant of the patent: **19.05.2021**
(21) Application number: 16718500.8
(22) Date of filing: 26.02.2016
(51) Int. Cl.: A01F 15/07

(54) **BALE FORMING AND WRAPPING APPARATUS AND METHOD WITH A MOVEABLE WRAPPING MATERIAL CONVEYER**
BALLENFORMUNGS- UND UMWICKLUNGSVORRICHTUNG MIT BEWEGLICHEM UMWICKLUNGSMATERIALFÖRDERER
PROCÉDÉ ET APPAREIL D'EMBALLAGE ET DE FORMATION DE BALLES DOTÉ D'UN CONVOYEUR MOBILE DE MATÉRIAU D'EMBALLAGE

(30) Priority: 04.03.2015 NL 2014395
(43) Date of publication of application: 10.01.2018
(73) Proprietor: Forage Company B.V., 3147 PB Maassluis (NL)
(72) Inventor: REIJERSEN VAN BUUREN, Willem Jacobus, 3147PB Maassluis (NL); DE JONG, Rudy, 3147 PB Maassluis (NL)
(74) Representative: AGCO Intellectual Property Department
(86) International application number: PCT/NL2016/050140
(87) International publication number: WO 2016/140569

(56) References cited:
- EP-A1- 2 664 230
- EP-A2- 2 769 616
- US-A- 5 129 208
- US-A1- 2005 109 007
- US-B1- 6 453 805

## Description

### FIELD OF THE INVENTION

The invention refers to an apparatus and a method for forming a bale in a bale forming chamber and for wrapping the bale in the bale forming chamber into wrapping material. The invention can in particular be used in an agricultural baler which picks up loose crop material from the ground, forms in a bale forming chamber under pressure a round-cylindrical or cuboid bale from the picked-up crop material, wraps this bale in the bale forming chamber, and deposits the wrapped bale on the ground.

### BACKGROUND OF THE INVENTION

A round baler (bale forming apparatus) as used for agricultural or recycling purposes moves or is pulled over ground or is stationary, is supplied with loose material, feeds the supplied loose material into a drum-shaped bale forming chamber, forms under pressure from this loose material in the bale forming chamber a round-cylindrical bale, rotates the increasing bale, wraps the created bale in the bale forming chamber into wrapping material, ejects the wrapped bale out of the bale forming chamber, and deposits the ejected wrapped bale on the ground or on a device which moves away the wrapped bale. A bale forming means defines and partially surrounds the bale forming chamber. The bale increases in the bale forming chamber and is rotated by the bale forming means. A casing surrounds the bale forming means while the bale is formed.

A web of wrapping material is stored on a reservoir, e.g. on a rotatably held reel, and is taken from this reservoir, e.g. is pulled off from the reel, as soon as a given wrapping start condition is fulfilled. The web of wrapping material
- is guided towards a wrapping material inlet wherein the inlet guides into the bale forming chamber,
- is injected through this wrapping material inlet into a space between the rotated bale and the bale forming means,
- is clamped between the bale forming means and the rotated bale and is conveyed by them, and
- is placed around the bale in the bale forming chamber.

In particular if the wrapping material inlet is positioned below the bale forming chamber or if the bale forming chamber is positioned between the wrapping material inlet and the reservoir, the web of wrapping material must be conveyed along a quite long way from the reservoir to the inlet. This takes time. The risk occurs that the web does not reach the wrapping material inlet. Therefore a guiding member, e.g. a conveying device, for the web pulled off from the reservoir is desired.

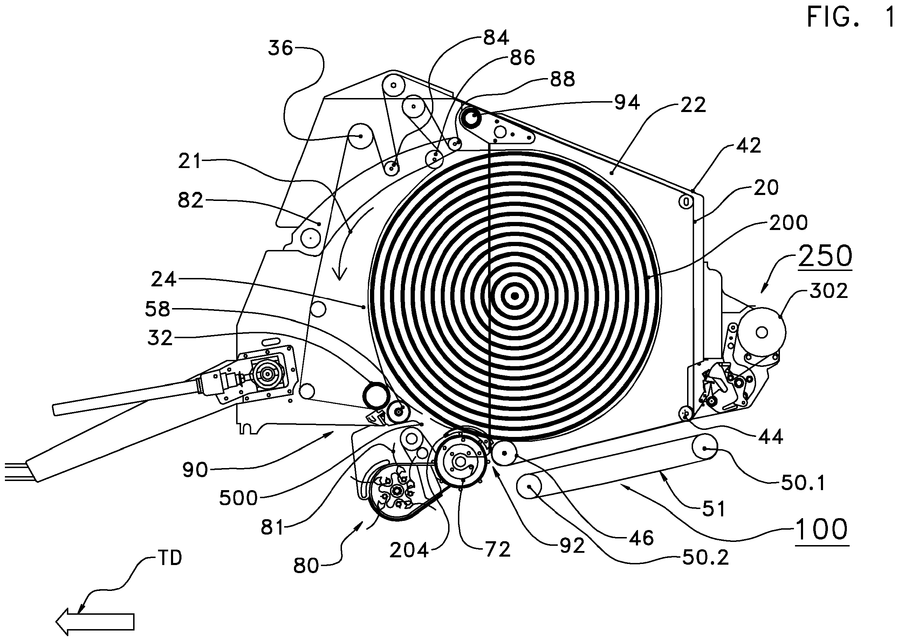

US 6453805 B1 discloses a large round baler 10 which forms a round-cylindrical bale in a baling chamber 44, cf. Fig. 1. Several belts (conveying elements) 28 surround this baling chamber 44. A net wrapping arrangement 39 is mounted on a rear wall 38 of a rear housing section 20 belonging to a casing (housing 12) for the baling chamber 44. The net wrapping arrangement 39 carries a net material supply roll 41. An arrangement 42 can secure loose twine ends in the surface of cylindrical bales. This arrangement 42 carries a supply roll 60 with adhesive tape. The tape 64 has to be conveyed to a baling chamber inlet 34 where it extends around the roll 26 and is injected into a space between a bale in the baling chamber and the belt 28.

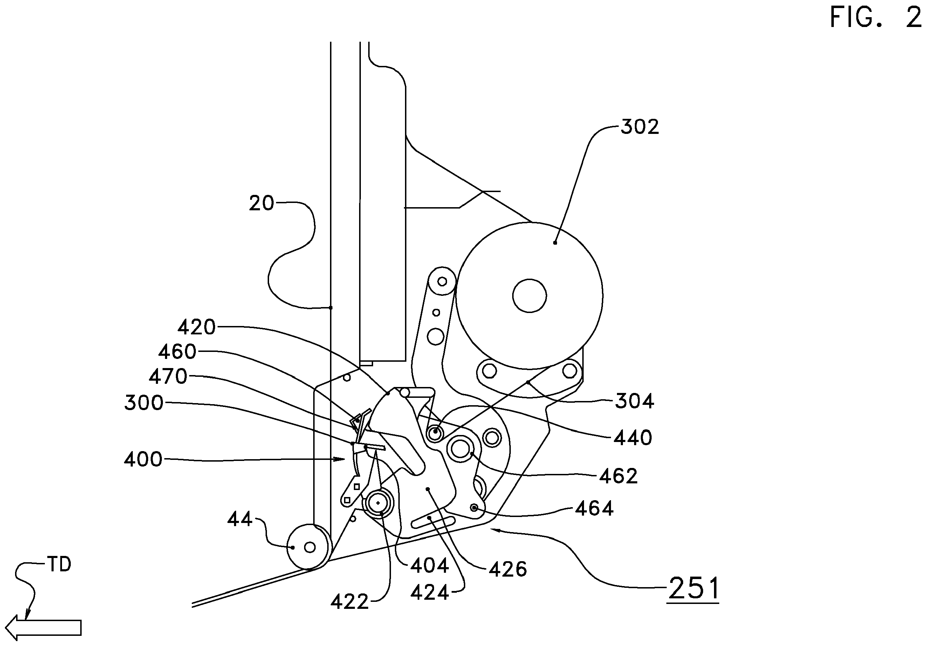

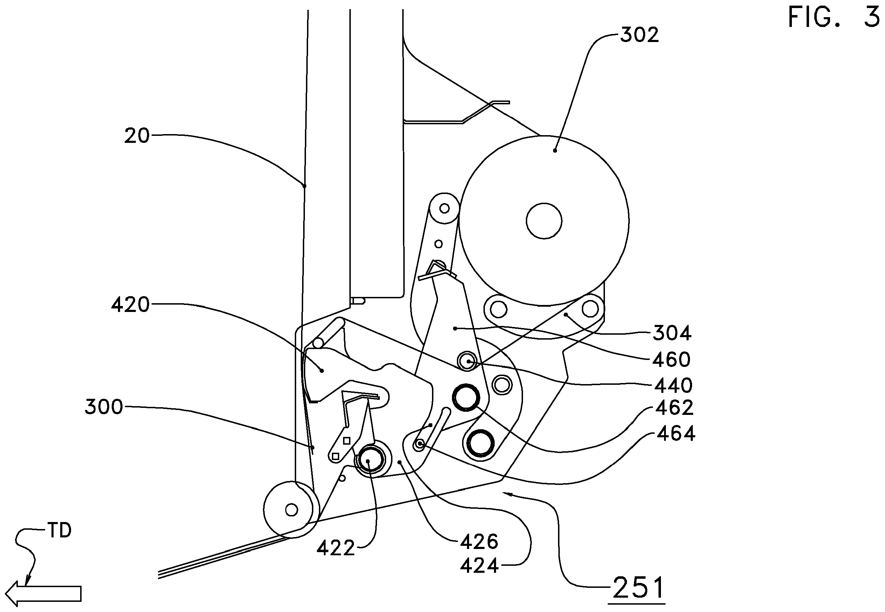

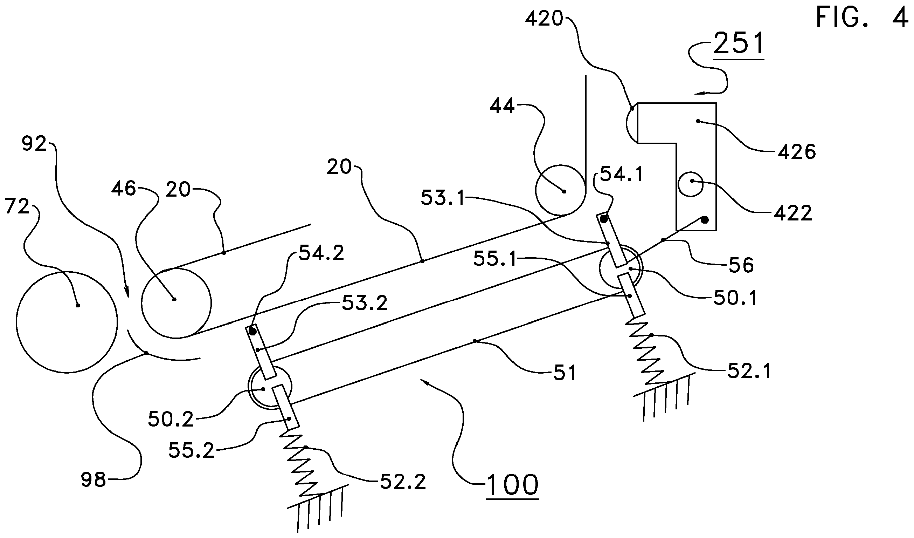

A guide structure 48 for a tape 64 taken from the roll 60 can pivot around a transverse support 42, cf. Fig. 2. The guiding structure 48 is configured as an inverted U with legs 66 with extends downward. A bottom 68 is positioned between the legs 66. The bottom 68 defines a guide surface 69 facing towards the belts (conveying elements) 28. For conveying the tape 64, the guide structure 48 is conveyed into a conveying position, cf. Fig. 3. The belts (conveying elements) 28 convey the tape 64 which rests on the guide structure 48. Afterwards the guide structure 48 is moved into a non-operating position in which a distance between the guide structure 48 and the belts 28 occurs, cf. Fig. 4. The rigid separating arrangement 54 comprises a sequence of needle-shaped pins 88, serrations, teeth or the like. When the actuator 56 moves the guide structure 48 from the operating position of Fig. 3 to the non-operating position of Fig. 4, the pins or serrations 88 penetrates the tape 64 and severs it.

On its way from the tape roll 60 to the baling chamber inlet 34 the tape 64 is guided around front and rear fastening material feed rolls 51 and 52 and along an adhesive tape separating or severing device 54, cf. Fig. 3. For pivoting the guide structure 48 from the operating position of Fig. 3 to the non-operating position of Fig. 4, an actuating arrangement 56 moves a lever arm 78. This lever arm 78 moves a positioning shaft 50. When the guide structure 48 is in the operating position, the tape 64 is guided along this guide surface 69.

In US 5,115,734 a round baler is described. Loose crop material is picked up from the ground and is conveyed through a feed passage 5 into a pressing chamber 4, cf. Fig. 1. A tying material feed device 22 is mounted below the bottom wall 32 of the feed passage 5. A cylinder 27 can pivot a frame 23 of the tying device 22 around an axis 24 into a feeding position (Fig. 1) and into a retracted position (Fig. 10). As soon as the bale R has reached the required size, the cylinder 27 moves the tying device 22 into the feeding position. A feeding roller 25 of the tying device 22 engages a driven belt 11 below the pressed chamber 4 and is driven by the belt 11. The tying material 29 is advanced by the feeding roller 25 and a further roller 26 and afterwards by the feeding roller 25 and the driven belt 11 below the pressed chamber 4. The rotating bale R and additional press elements 9 further advance the tying material 29 such that the tying material 29 surrounds the bale R in the pressed chamber 4.

The baler 10 of US 5,129,207 comprises a wrap material dispensing system 34 mounted at the lower rear portion of the baler 10, cf. Fig. 1. A wrapping material supply system 36 unrolls wrapping material 39 from a supply roll 40 and supplies wrapping material 39 to a conveying assembly 38. This conveying assembly 38 cooperates with several bale-forming belts 12 which are arranged around the pressing chamber for forming a bale. The conveying assembly 38 cooperates with the bale forming belts 12 for wrapping a bale 14. Two pinch rollers 62, 64 advance wrapping material 39 from the supply roll 40. The conveying assembly 38 conveys wrapping material 39 by means of a several parallel wrapping material conveying belts 88 which are guided around rollers 82 to 86, cf. Fig. 2. The bale forming belts 12 engage the wrapping material conveying belts 88 and drive them. The wrapping material 39 is guided through an entryway 102 into the space between the belts 12 and 88 until the leading edge of the wrapping material 39 guides the roller 84 and is guided by a curved guiding element 104 towards the pressing chamber.

In US 5,129,208 a baler 10 with several bale-forming belts 20 and with a bale wrap feed apparatus 26 is described. The web feed apparatus 26 is mounted on a lower, rearward portion of the tailgate 16. Two wrap feed rollers 44 and 46 together grip the web 40 of wrapping material and pull the web 40 from a roll 28 serving as a reservoir. The web feed roll 46 is driven via a V belt 54 guided around pulleys 50, 52, cf. Fig. 4. The web 40 is further conveyed by several parallel web feed belts 32 guided around rollers 34, 36, 38. A toggle roller 122 mounted between two toggle plates 124 tensions the web feed belts 32 and biases them against the bale-forming belts 20. The plates 124 with the toggle roller 122 can be pivoted between a drive position and a release position around a pivoting axis 126 by two cylinders 128, cf. Fig. 2 and Fig. 3. A belt guide rack 98 with several separator fingers 96 can be pivoted into an upper position in which the fingers 96 engage into gaps between bale-forming belts 20 and into a lower position below the web feed belts 32.

The baling press 10 of US 7,617,653 B2 wraps a bale 16 in the pressing chamber 12 into a wrapping web 18. The wrapping apparatus 14 is mounted at the front part of the baler 10, cf. Fig. 1. A propulsion element (roller 29) pulls wrapping web 18 from a reel 28. A guide device 30 with two walls 31, 34 transports the web 18 to a conveyor device 32. This conveyor device 32 conveys the web 18 towards the bale 16. A belt 37 of the web conveyor device 32 is guided around two rolls 33, 35, cf. Fig. 2. The roll 33 is driven and moves the belt 37.

In US 7,181,900 B2 the wrapping device with a reel 302 is mounted at the tailgate of a round baler. A web 304 of wrapping material is pulled from the reel 302 towards an inlet 92 which is positioned below the bale forming chamber and between the pivotal tailgate 22 and the stationary front housing 24. A net pan 420 is rotated around an axle 422 and presses the web 304 in a horizontal direction against the pressing belts 20. The web 304 is further guided through a funnel 112 and between the pressing belts 20 and a net feed pan 96 below the belts 20. The net feed pan 96 can pivot around an axle 100 and is biased by a spring 108 towards the belts 20.

### SUMMARY OF THE INVENTION

A problem solved by the invention is to provide a bale forming and wrapping apparatus with the features of the preamble of claim 1 and a bale forming and wrapping method with the features of the preamble of claim 16 wherein a drive for moving the web guiding device from one position into the other is not necessary.

This problem is solved by a bale forming and wrapping apparatus with the features of claim 1 and by a bale forming and wrapping method with the features of claim 16. Preferred embodiments are specified in the depending claims.

The bale forming apparatus according to the invention comprises
- a bale forming means providing a bale forming chamber,
- a web guiding device positioned outside of the provided bale forming chamber,
- a moveable web processing member,
- a web processing member actuator for the web processing member, and
- a mechanical guiding device coupling member.

The web guiding device is positioned outside of the bale forming chamber and is moveable between
- a conveying position and
- a parking position.

The web processing member is positioned outside of the bale forming chamber and is moveable between
- at least one web touching position and
- at least one remote position.
   A gap between
- the web guiding device being in the or one remote position and
- the bale forming means
   occurs.

The bale forming and wrapping apparatus according to the invention operates as follows and the method according to the invention comprises the following steps:
- The bale forming means forms a bale in the provided bale forming chamber.
- The web processing member actuator moves the web processing member from a start position into an end position. The start position is either the or one remote position or the web touching position. The end position is the other position, i.e. either the web touching position or the or one remote position.
- By being moved from the start position into the end position, the web processing member changes its position relative to a web of wrapping material which is positioned outside of the bale forming chamber.
- The web processing member in the web touching position touches the web of wrapping material and processes the web outside of the bale forming chamber.
- The guiding device coupling member couples
   - the movement of the web processing member from the start position into the end position with
   - a movement of the web guiding device from the or one parking position into the conveying position.
- The web guiding device in the conveying position and the bale forming means together grasp a web of wrapping material and thereby clamp the web between them while the web is still outside of the bale forming chamber.
- The web guiding device in the conveying position and the bale forming means jointly convey the clamped web towards a wrapping material inlet. This inlet guides into the bale forming chamber.
- The conveyed web is inserted through the wrapping material inlet into the bale forming chamber.
- The bale in the bale forming chamber is wrapped into the inserted web.
- The wrapped bale is ejected out of the bale forming chamber.

### ADVANTAGES

Thanks to the web guiding device according to the invention and the driven bale forming means the web of wrapping material is actively conveyed and securely guided from a wrapping material reservoir towards the wrapping material inlet which guides into the bale forming chamber. This reservoir can comprise at least one rotatably mounted wrapping material supply reel. A holder for this reservoir, e.g. an unrolling station for a supply reel, can be positioned at a suitable place such that a human operator can ergonomically replace an empty reservoir in the holder with a new reservoir. The position of the reservoir holder can be selected nearly independently from the position of the wrapping material inlet. Nevertheless the web is conveyed to the wrapping material inlet in short time. In particular it is possible to position the holder in a position in which a standing human operator has a good access to the reservoir and it is further possible to position the wrapping material inlet below the bale forming chamber, e.g. between a discharge gate and a stationary casing part of a casing for the bale forming chamber.

Thanks to the web guiding device the web is also securely guided if the bale forming and wrapping apparatus belongs to a vehicle, e.g. to an agricultural harvester. This vehicle can be operated in a hilly environment such that the inclination and/or tilting angle of the vehicle can change during operation. The vehicle can be operated on a field and therefore be subjected to wind, rain, dirt, debris, and further environmental conditions which can neither be predicted nor be influenced. Thanks to the web guiding device the web is nevertheless securely guided when being conveyed to the wrapping material inlet. The risk is significantly reduced that the conveyed web does not reach the wrapping material inlet.

Thanks to the web guiding device the same bale forming and wrapping apparatus can subsequently process different kinds of wrapping material, e.g. different kinds of net or a net as well as a plastic sheet. These different wrapping material kinds can have different frictional or elastic properties. No sensor for detecting the exact current position of the web's leading edge or for identifying the kind or a property of the currently used wrapping material is required. This advantage is in particular achieved by using the web guiding device and by clamping the web between the bale forming means and the web guiding device being in the conveying position.

The bale forming means needs a drive such that the bale forming means forms under pressure the bale in the bale forming chamber and rotates the injected loose material and later the increasing bale. According to the invention the web guiding device can be moved into the conveying position. The web is clamped and conveyed by the bale forming means and the web guiding device being in the conveying position. Therefore the driven bale forming means itself conveys the web. It is possible but not necessary to provide the web guiding device with an own drive. It suffices that the driven bale forming means rotates the bale in the bale forming chamber and additionally conveys the web towards the wrapping material inlet and the web guiding device being in the conveying position presses the web against the bale forming means.

According to the invention the web of wrapping material is jointly conveyed by the web guiding device being in the conveying position and the bale forming means and is additionally processed by the web processing member. The web processing member can be positioned outside the bale forming chamber and spaced apart from the web guiding device. Therefore the best respective positions for the web processing member and for the web guiding device can be selected.

According to the invention the web guiding device can also be moved into the or one parking position. A gap, i.e. a distance, between the web guiding device in the parking position and the bale forming means occurs. It is possible but thanks to the parking position not necessary to stop the bale forming means when no web is to be conveyed. Thanks to the parking position of the web guiding device the bale forming means can be moved in a permanent operation. It is further not necessary to move the bale forming means away from the web guiding device. Such a movement is often not possible. Thanks to the distance the risk is significantly reduced that debris between the bale forming means and the web guiding device causes a jam.

According to the invention the mechanical guiding device coupling member transfers a movement of the web processing member onto the web guiding device. Therefore the web processing member actuator is not only used for moving the web processing member from the start position into the end position but is in addition used for moving the web guiding device from the parking position into the conveying position. Therefore a drive or motor especially for moving the web guiding device from one position into the other position is saved. In addition a control unit and a monitoring unit for such a motor or drive are saved. In contrast the coupling member can be implemented as a purely passive part, e.g. as a set of pivotal rods or levers connecting the web guiding device with the web processing member. It is possible to implement the coupling member such that no energy supply and no control unit and no monitoring element for this coupling member are required.

### PREFERED EMBODIMENTS

In one embodiment a conveying device biasing member biases the web guiding device into the parking position. The biasing member ensures that the web processing device remains in the parking position as long as no web is to be conveyed. This biasing member can be implemented as a purely passive device, e.g. can comprise at least one helical or hydraulic spring. The web guiding device is moved in the conveying position against the retaining force of the biasing member. Therefore the retaining force needs only to be surpassed when the web guiding device is needed for conveying the web. This web conveying is only performed during a short time - compared with the time needed for forming the bale in the bale forming chamber. The web processing member actuator can be an actuator applying force in one direction.

In one embodiment the web guiding device comprises a conveying belt which is guided around at least two deflecting members, e.g. around two deflecting rollers. The guiding device coupling member is preferably coupled with one deflecting member or with a frame of the web guiding device. In a further embodiment the web guiding device comprises a pivotal guiding sheet. Preferably this guiding sheet has a segment which tapers seen in the conveying direction. Therefore a kind of funnel is between the bale forming means and the guiding sheet is provided even when the web guiding device is in the conveying position.

According to the invention the web guiding device is positioned outside of the bale forming chamber. In one embodiment the web guiding device being positioned outside of the bale forming chamber presses a web of wrapping material from against the bale forming means when being in the conveying position. In one implementation the bale forming means comprises at least one pressing belt. The inner surface of the or every pressing belt points towards the bale forming chamber. The web guiding device presses the web against an outer surface of the or of at least one pressing belt.

In one embodiment the web guiding device has the same width than the bale forming means, e.g. the same dimension in a direction perpendicular to the conveying direction. In a further embodiment the width of the web guiding device is smaller than the width of the bale forming means.

According to the invention the web processing member can be moved into a web touching position. In this web touching position the web processing member touches the web of wrapping material. Different embodiments of the moveable web processing member are possible, e.g. it presses the web against the bale forming means or pulls the web from a rotatable reel or further reservoir. The mechanical coupling device couples a movement of the web processing member into the web touching position serving as the start position with a movement of the web guiding device into the conveying position. Therefore the web can be conveyed by the web processing member being in the web touching position as well as by the web guiding device being in the conveying position. Thanks to the coupling member the web guiding device is moved into the conveying position not earlier than necessary, i.e. remains in the parking position as long as possible. Thereby the risk is further reduced that debris between the web guiding device being in the conveying position and the bale forming means causes a jam.

In a further embodiment a severing device severs the web after the bale is wrapped. After the web is severed, the web guiding device is moved back into the parking position as no wrapping material for this bale is currently to be conveyed. A movable part of the severing device belongs to the web processing member and can be moved from a parking position into the severing position in which it severs the web. The parking position serves as the start position and the severing position as the end position. The web processing member belongs to the severing device and can carry a cutting edge or can serve as an opposing element for a stationary cutting edge. In a further embodiment the moveable severing device part and an opposing element together clamp the web. The clamped web is not severed but torn. This embodiment saves a cutting edge. The coupling member couples the movement of the severing device part from the parking position into the severing position with a movement of the web guiding device from the conveying position into the parking position.

It is possible that the web processing member comprises a touching part which can be moved into the web touching position and further comprises one movable part of the severing device. The movement of the touching part into the web touching position is coupled with the movement of the web guiding device into the conveying position. The movement of the movable severing device part from the parking position into the severing position is coupled with a movement of the web guiding device back into the parking position.

In one embodiment a casing surrounds the bale forming chamber while the bale is formed and wrapped in the bale forming chamber. The casing comprises a movable discharge gate and a further casing part. The discharge gate is in a bale forming position while the bale is formed and wrapped in the bale forming chamber and while the web is conveyed towards the wrapping material inlet. The web guiding device and preferably a reservoir for the wrapping material are mounted at the discharge gate. Preferably the wrapping material inlet is positioned between the discharge gate and the further casing part, in one implementation below the bale forming chamber. For ejecting the wrapped bale out of the bale forming chamber the discharge gate carrying the web guiding device is moved away from the further casing part into a bale ejecting position such that the wrapped bale can be ejected out of the bale forming chamber.

In one embodiment the movable discharge gate has two parts, an adjacent discharge gate part and a further discharge gate part. The adjacent discharge gate part is positioned between the further casing part and the further discharge gate part. When the discharge gate is in the bale ejecting position, i.e. is opened, the adjacent discharge gate part is adjacent to the provided aperture. Moving the two-parted discharge gate according to this embodiment into the bale ejecting position comprises the following steps:
- The further discharge gate part is moved away from the further casing part.
- The adjacent discharge gate part is also moved away from the further casing part.
- The adjacent discharge gate part is hereby also moved with respect to the further discharge gate part away from the further casing part.

With other words: The two-parted discharge gate is folded together when being moved into the bale ejecting position.

The width of the aperture is determined by the position of the adjacent discharge gate relative to the further casing part. As the adjacent discharge gate part is movable with respect to the further discharge gate part, the adjacent discharge gate part is moved along a longer path or around a larger pivoting angle than the further discharge gate part carrying the web guiding device. Therefore the same width of the aperture can be achieved quicker or with less mechanical power compared with a one-parted tailgate.

In one implementation of the foldable discharge gate a discharge gate actuator moves the further discharge gate part away from the further casing part when the discharge gate is moved into the bale ejecting position. A mechanical coupling element transfers this movement of the further discharge gate part onto the adjacent discharge gate part and causes the adjacent discharge gate part to move with respect to the moved further discharge gate part. The implementation with the coupling element saves an actuator for the adjacent discharge gate part.

In one embodiment a guiding member, e.g. a curved sheet, is positioned between the web guiding device and the wrapping material inlet, i.e. downstream from the web guiding device. This guiding member guides the web towards the wrapping material inlet. In one implementation the guiding member is curved and guides the wrapping material around a curve towards the wrapping material inlet. The guiding member bridges the gap between the web guiding device and the wrapping material inlet. The guiding member can be implemented as a purely passive part. The embodiment with the guiding member can be combined with an embodiment in which the wrapping material inlet is positioned below the bale forming chamber. The guiding member is also positioned below the bale forming chamber and guides the web upwards towards the wrapping material inlet.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a bale forming and wrapping apparatus according to one embodiment of the invention in a side view;
Fig. 2 shows the net pusher belonging to the web processing member of the apparatus of Fig. 1 in a parking position;
Fig. 3 shows the net pusher of Fig. 2 in a web touching position;
Fig. 4 shows the web guiding device of the apparatus of Fig. 1 in the parking position;
Fig. 5 shows the web guiding device of Fig. 4 in the conveying position;
Fig. 6 shows an alternative embodiment of the web guiding device in the parking position;
Fig. 7 shows the web guiding device of Fig. 6 in the conveying position;
Fig. 8 shows a further embodiment of the invention with a two-parted foldable discharge gate being in the bale forming position;
Fig. 9 shows the apparatus of Fig. 8 with the discharge gate being in the bale ejecting position.

### DETAILED DESCRIPTION OF EMBODIMENT

In the embodiment the invention is used in a bale forming and wrapping apparatus which forms and wraps round-cylindrical bales (round baler). This round baler picks-up loose crop material from the ground, conveys the crop material towards a bale forming chamber, injects the crop material through a crop material inlet into the bale forming chamber, forms under pressure from the injected crop material a round-cylindrical bale in the bale forming chamber, wraps the formed bale in the bale forming chamber into a web of wrapping material, and ejects the wrapped bale. The wrapped bale is deposited on the ground. The wrapping material can in particular be a net, an ensemble of twine strands, or a plastic sheet.

Fig. 1 shows the round baler according to the invention in a side view. Fig. 1 shows the following parts:
- a pick-up unit 80 with several spring mounted pick-up tines 81,
- an upper starter roller 58 and a lower starter roller 72 which delimit from two sides a crop material inlet 90,
- several parallel pressing belts 20 which define and surround the bale forming chamber,
- several deflecting rollers 32, 36, 84, 86, 88, 42, 44, 4
- 6 for the pressing belts 20,
- a tensioning arm 82,
- a stationary front housing 24 and a pivotal tailgate 22 which together form a casing for the bale forming chamber,
- a horizontal tube 94 which forms the pivoting axle of the tailgate 22,
- a wrapping apparatus 250 with a reel 302 with wrapping material,
- a web guiding device 100 with a web conveying belt 51 guided around two web deflecting rollers 50.1, 50.2,
- a wrapping material inlet 92 positioned between the lower starter roller 72 and the deflecting roller 46, and
- optionally a wedge 204 for forming the shape of the round-cylindrical bale 200.

The round baler forms in the bale forming chamber a round-cylindrical bale 200 comprising two circular front faces and a circumferential surface between the front faces. As can be seen in Fig. 1, the bale 200 is formed from several layers of crop material. The pressing belts 20 rotate the bale 200 in the direction indicated by the arrow.

The deflecting rollers 32 and 36 are mounted at the front housing 24 and are driven via the baler's input shaft (not shown). These rollers 32, 36 move the pressing belts 20. The deflecting rollers 84, 86, 88 are mounted on the pivotal tensioning arm 82 and ensures that the pressing belts 20 are tensioned and apply a sufficient pressure onto the crop material in the bale forming chamber. The deflecting rollers 42, 44, 46 are rotatably mounted at the tailgate 22. The tailgate 22 can rotate with respect to the front housing 24 around the pivoting axle 94. The wrapping apparatus 250 and the web guiding device 100 are mounted at the tailgate 22.

The wrapping apparatus 250 including the reel 302 and the web guiding device 100 are mounted at the tailgate 22. For ejecting a formed and wrapped bale 200 out of the bale forming chamber, the tailgate 22 is pivoted away from the front housing 24. The tailgate 22 including the entire wrapping apparatus 250 and the web guiding device 100 is pivoted around the axis 94 upwards against the force of gravity.

The web guiding device 100 can be moved in a conveying position and in a parking position which movement is explained below. Fig. 1 shows the web guiding device 100 in the parking position. The pressing belts 20 and the web guiding device 100 being in the conveying position convey a web 304 of wrapping material towards the wrapping material inlet 92.

Fig. 2 and Fig. 3 show a net pusher 251 which belongs to the movable web processing member. Fig. 2 shows the net pusher 251 in a parking position and Fig. 3 in a web touching position. In the parking position a gap between the net pusher 251 and the web 304 occurs. In the web touching position the net pusher 251 pushes the web 304 against the outer surface of the pressing belts 20. The web 304 is clamped between a pusher pan 420 of the net pusher 251 and the pressing belts 20. The pressing belts 20 are moved and convey the web 304. Thereby the web 304 is pulled from the rotatably mounted reel 302.

The net pusher 251 can rotate in both rotating directions around the pivot tube 422 which extends perpendicular to the drawing planes of Fig. 2 and Fig. 3. The net pusher 251 comprises the pusher pan 420 and a left and a right pusher holders 426 which hold the pusher pan 420. In every pusher holder 426 a longitudinal slot 424 is inserted.

The net pusher 251 is rotated around the pivoting axis 422 from the parking position (Fig. 2) into the web touching position (Fig. 3) by means of a driver 460. This driver 460 is moved by a driver actuator (not shown). The driver 460 can rotate around a pivot tube 462 which extends perpendicular to the drawing planes of Fig. 2 and Fig. 3 and parallel to the tube 422. A pin 464 at the driver 460 can engage into the longitudinal slot 424 in the pusher holder 426. In the web touching position (Fig. 3) the pin 464 engages the longitudinal slot 424. The driver 460 moves the net pusher 251 into the web touching position (Fig. 3) by rotating it around the axis 422.

The driver 460 comprises a cross member 470. This cross member 470 is pivoted when the driver 460 is rotated around the pivoting axis 462. After the bale 200 in the bale forming chamber is entirely wrapped, the web 304 is severed. The leading edge 300 of the web 304 is biased by the cross member 470 against a spring member 404.

Fig. 2 shows the driver 460 in a situation in which the leading edge 300 is kept between the cross member 470 and the spring 404. A movement of the driver 460 from the position shown in Fig. 3 to the position shown in Fig. 2 causes the cross member 470 to pivot and to press the web 304 against a stationary knife 400. This movement causes that the knife 400 severs the web 304.

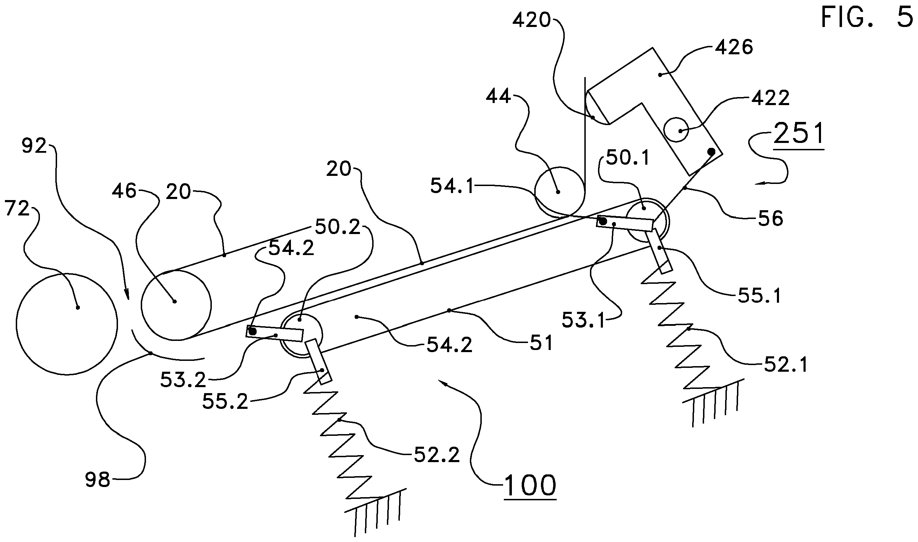

As already mentioned, the net pusher 251 in the web touching position pushes the web 304 against the outer surface of the pressing belts 20. When the net pusher 251 is moved from the parking position into the web touching position, the web guiding device 100 is moved from a parking position into a conveying position. Fig. 4 shows the web guiding device 100 in the parking position and Fig. 5 in the conveying position. Fig. 4 and Fig. 5 further show how the movement of the net pusher 251 from the parking position into the web touching position is connected with a movement of the web guiding device 100 from the parking position into the conveying position.

Fig. 4 and Fig. 5 show the following parts of the round baler according to the embodiment:
- the wrapping material inlet 92 below the lower starter roller 72 and the deflecting roller 46,
- the curved web guide 98 below the wrapping material inlet 92,
- a segment of the pressing belts 20 guided around the deflecting rollers 44 and 46,
- the net pusher 251 with the pusher pan 420 and the pusher holder 426,
- the pivot tube 422 serving as the pivoting axis for the net pusher 251,
- the web conveyor belt 51,
- the two web belt deflecting rollers 50.1, 50.2,
- two springs 52.1, 52.2,
- two connecting elements 55.1, 55.2 between the deflecting rollers 50.1, 50.2 and the springs 52.1, 52.2,
- a front lever arm 53.2 and a rear lever arm 53.1 for the deflecting rollers 50.1, 50.2,
- the two rotating axes 54.1, 54.2 of the lever arms 53.1, 53.2, and
- a connecting rod 56 between the net pusher 251 and the rear lever arm 53.1.

The web guiding device 100 is positioned downstream from the net pusher 251. The lever arms 53.1, 53.2 are rotatably mounted at the tailgate 22 in two rotating axes 54.1, 54.2. The springs 52.1, 52.2 are connected with the connecting elements 55.1, 55.2 and with the tailgate 22. The terms "front" and "rear" refer to the travelling direction TD and the term "downstream" to the conveying direction of the web 304.

As long as the bale 200 is formed in the bale forming chamber, the net pusher 251 and the web guiding device 100 are in the respective parking positions as shown in Fig. 1, Fig. 2, and Fig. 4. The two springs 52.1, 52.2 keep the web guiding device 100 in the parking position. In one implementation the net pusher 251 is kept in the parking position by the springs 52.1, 52.2 via the web guiding device 100 and the connecting rod 56.

As soon as a wrapping start signal is generated, the driver actuator (not shown) rotates the driver 460 from the position shown in Fig. 2 to the position shown in Fig. 3. By this movement the web 304 is released from the crossbar 470. The driver 460 is rotated around the axis 462 and causes the net pusher 251 to rotate around the axis 422 (in Fig. 2 and Fig. 3 anti-clockwise). The net pusher 251 is moved from the parking position (Fig. 4) into the web touching position as shown in Fig. 5. This movement of the net pusher 251 is transferred onto the web guiding device 100 by the mechanical coupling rod 56. The coupling rod 56 pulls the rear lever arm 53.1 (in Fig. 5 anti-clockwise). The rotated rear lever arm 53.1 moves the rear belt deflecting roller 50.1 against the retaining force of the spring 52.1 towards the pressing belt 20. A web guiding device frame (not shown) keeps the distance between the two belt deflecting rollers 50.1, 50.2 constant. Therefore the front lever arm 53.2 carrying the front belt deflecting roller 50.2 is also moved towards the pressing belts 20. The front lever arm 53.2 is rotated around the axis 54.2.

In the position shown in Fig. 5 the web 304 is pressed against the pressing belts 20 by the pusher pan 420 and afterwards by the web conveying belt 51. In the embodiment the belt deflecting rollers 50.1, 50.2 are idler rollers. The web 304 is moved by the pressing belts 20. The web conveying belt 51 presses the conveyed web 304 against the pressing belts 20. The leading edge 300 of the web 304 reaches the roller 50.2 and is deflected by the web guide 98 towards the wrapping material inlet 92 and is inserted through the wrapping material inlet 92 into the bale forming chamber. The pressing belts 20 and the rotated bale 200 together clamp and grasp the web 304.

As the soon as the required number of wrapping material layers is placed around the bale 200 in the bale forming chamber, the net pusher 251 and the web guiding device 100 are moved back into the parking position. The web guiding device 100 is moved back in the parking position by the springs 52.1, 52.2. The driver 460 is also rotated. Thanks to this driver movement the web 304 is severed by the knife 400. In one embodiment the drive actuator is double-acting, i.e. can pivot the driver 460 in both directions around the tube 462. In a further embodiment the driver actuator only moves the driver 460 and thereby the net pusher 251 from the parking position into the web touching position. The springs 52.1, 52.2 and in one implementation a further retaining member (not shown) moves the net pusher 251 and the web guiding device 100 back into the parking positions.

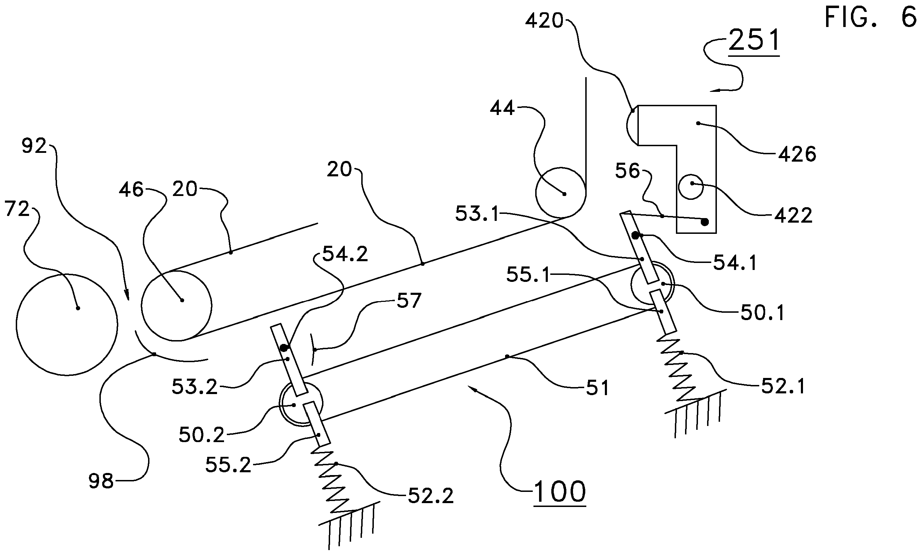

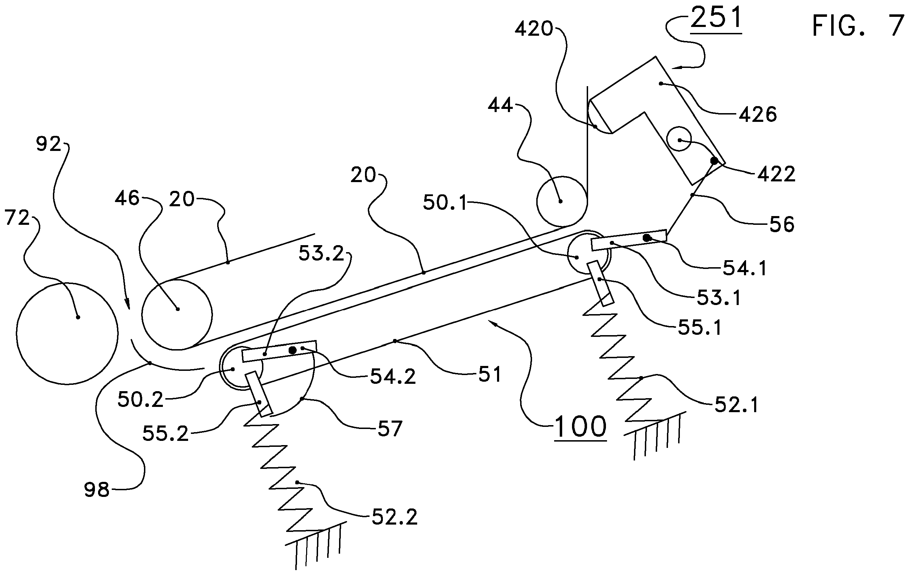

Fig. 6 and Fig. 7 show an alternative implementation of the mechanical connection between the net pusher 251 and the web guiding device 100. A guide 57 guides the front lever arm 53.2 between the orientation for the parking position (Fig. 6) and the orientation for the conveying position (Fig. 7). The basic principal is the same than in the implementation of Fig. 4 and Fig. 5.

The driver 460 moves the net pusher 251 from the parking position (Fig. 6) in the web touching position (Fig. 7). The net pusher 251 pulls the rod 56. The rod 56 rotates the rear lever 53.1 clockwise around the rotating axis 54.1. This rotation causes the rear belt deflecting roller 50.1 to move towards the pressing belts 20. The guide 57 guides the front belt deflecting roller 50.2 to also move towards the pressing belts 20.

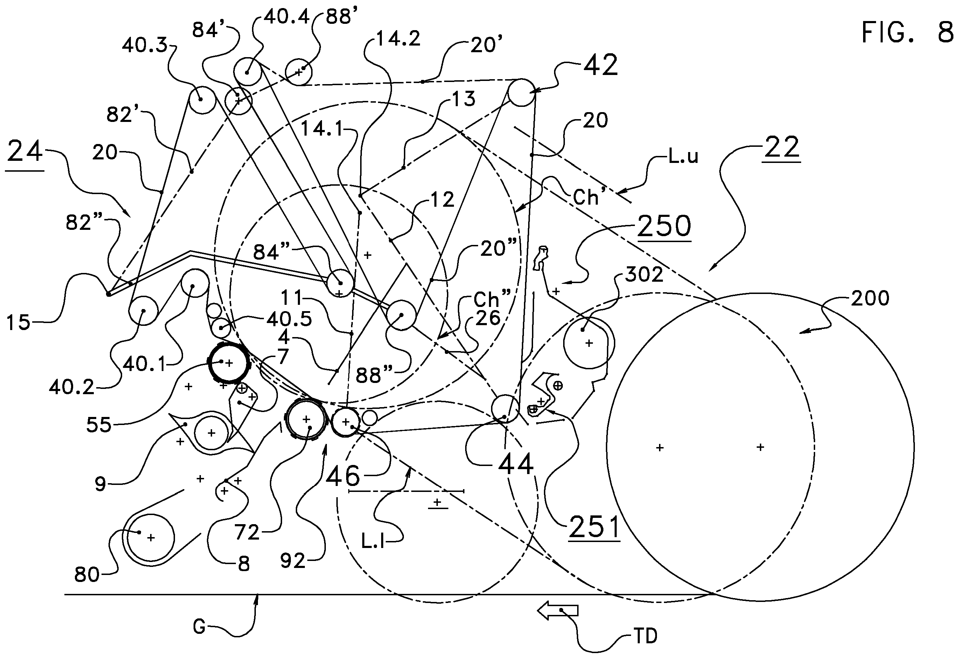

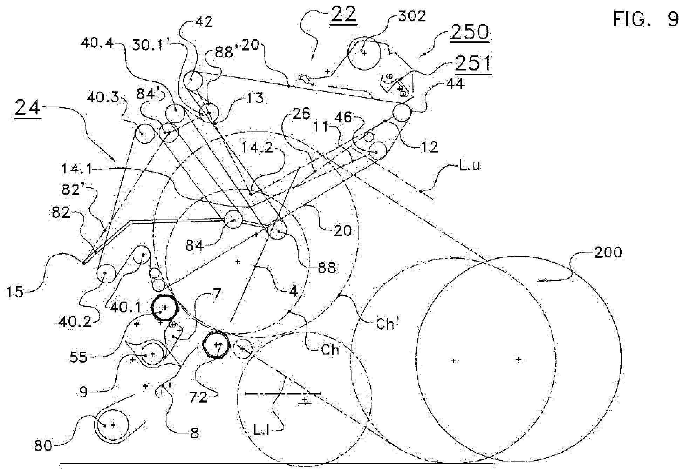

For ejecting the wrapped bale 200 out of the bale forming chamber, the tailgate 22 has to be moved away from the stationary front housing 24 such that a sufficiently large aperture for ejecting the bale 22 is provided. In the implementation shown in Fig. 1 to Fig. 7 the entire tailgate 22 including the wrapping apparatus 250 and the web guiding device 100 has to be moved against the force of gravity sufficiently far away from the stationary front housing 24 for providing the required ejecting aperture. Fig. 8 and Fig. 9 show an alternative embodiment with a two-parted foldable tailgate 22. This alternative embodiment requires less mechanical power for opening the tailgate 22.

Coinciding parts of the round baler have the same reference signs. Fig. 8 and Fig. 9 show the following parts which are also parts of the embodiment of Fig. 1 to Fig. 7:
- a feeding channel bottom 8,
- a conveying rotor 9 which engages from above into the feeding channel above the feeding channel bottom 8,
- a stripping element 7 for the conveying rotor 9,
- five stationary deflecting rollers 40.1, 40.2, ... mounted at the front housing 24,
- the pivotal tensioning arm 82 in its uppermost position 82',
- the pivotal tensioning arm 82 in its lowermost position 82",
- the deflecting rollers 84, 88 mounted at the tensioning arm 82 in their uppermost positions 84', 88' corresponding with the uppermost position 82' of the tensioning arm 82,
- the lowermost positions 84" and 88" of the movable deflecting rollers 84, 88,
- the bale forming chamber Ch (intermediate size) and Ch' (maximal size).

The following additional parts provide a two-parted tailgate 22:
- a pivotal holding arm 11 for the deflecting roller 46,
- a pivotal carrying arm 12 for the deflecting roller 44,
- a pivotal carrying arm 13 for the deflecting roller 42,
- a tailgate actuator 4 which is pivotally connected with the front housing 24 and with the pivotal carrying arm 12, and
- a connecting member 26.

The pivotal holding arm 11 can rotate around the pivoting axis 14.1. The two pivotal carrying arms 12 and 13 are rigidly connected with each other and can rotate around the joint pivoting axis 14.2. The tailgate actuator 4 can rotate the connected carrying arms 12, 13 around the axis 14.2 away from the stationary front housing 24. The connecting member 26 is pivotally connected with the carrying arm 12 and the holding arm 11.

In the embodiment of Fig. 8 and Fig. 9 the pivotal carrying arrangement with the carrying arms 12, 13 and the pivotal holding arm 11 together form the tailgate 22 of this round baler. For sake of clarity the web guiding device 100 and the net pusher 251 are omitted in Fig. 8 and Fig. 9. The net pusher 251 is preferably mounted at the pivotal carrying structure 12, 13. In one implementation the front lever arm 53.2 for the front belt deflecting roller 50.2 is mounted at the pivotal holding arm 11. The rear lever 53.1 for the rear belt deflecting roller 50.1 is mounted at the pivotal carrying arm 12.

Fig. 8 shows this two-parted tailgate 22 in a closed position (bale forming position), Fig. 9 in an opened position (bale ejecting position). Fig. 8 and Fig. 9 show a lower line L.I and upper line L.u. The aperture between the stationary front housing 24 and the tailgate 22 is positioned between these two lines L.I, L.u.

For opening the tailgate 22, the following steps are performed:
- The hydraulic tailgate actuator 4 expands and rotates the carrying structure 12, 13 around the pivoting axis 14.2 upwards and away from the front housing 24.
- The coupling member 26 transfers this pivotal movement of the carrying structure 12, 13 onto the holding arm 11.
- The holding arm 11 pivots towards the carrying structure 12, 13.
- Thereby the pivotal holding arm 11 pivots around the pivoting axis 14.1 away from the stationary front housing 24.
- In addition the deflecting roller 46 mounted on the holding arm 11 moves towards the deflecting roller 44 on the carrying arm 12.

In one implementation the front belt deflecting roller 50.2 moves towards the rear belt deflecting roller 50.1.

A comparison of Fig. 8 with Fig. 9 shows that in the opened position of the tailgate 22 the distance between the deflecting rollers 46 and 44 is smaller than in the closed position of Fig. 8. When opening the tailgate 22, the tailgate 22 is folded together, in this implementation by pivoting the holding arm 11 with the roller 46 away from the stationary front housing 24 and towards the carrying structure 12, 13 with the rollers 44, 42.

As a result of folding the tailgate 22 together, only the holding arm 11 and the roller 46 need to be moved along the full pivoting angle for providing the required aperture. The carrying structure 12, 13 with the wrapping apparatus 250 and the deflecting rollers 42, 44 only needs to be moved over a smaller pivoting angle. Therefore less time is required for opening the tailgate 22. Or the tailgate 22 can be opened in the same time but with a smaller mechanical power.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 4 | tailgate actuator, moves the carrying member 12, comprises two piston-cylinder devices |
| 7 | stripping element, cleans the gaps between the rigid tines of the conveyor rotor 9 |
| 8 | feeding channel bottom |
| 9 | conveyor rotor, engages from above into the feeding channel |
| 11 | pivotal holding arm for the pivotal deflecting roller 46, belongs to the adjacent discharge gate part |
| 12 | pivotal carrying arm for the deflecting roller 44, belongs to the pivotal carrying structure (further discharge gate part) |
| 13 | pivotal carrying arm for the deflecting roller 42, belongs to the pivotal carrying structure (further discharge gate part) |
| 14.1 | pivoting axis of the pivotal holding arm 11 |
| 14.2 | joint pivoting axis of the pivotal carrying arms 12 and 13 |
| 20 | pressing belts |
| 20' | pressing belts in the position corresponding to the uppermost position of the pivotal tensioning arm 82' |
| 20" | pressing belts in the position corresponding to the lowermost position of the pivotal tensioning arm 82' |
| 21 | direction in which the belts 20 rotate the bale 200 |
| 22 | pivotal tailgate (discharge gate), carries the wrapping apparatus 250 and the web guiding device 100 |
| 24 | stationary front housing |
| 26 | connecting member, belongs to the mechanical coupling member between the pivotal holding arm 11 and the carrying arm 12, comprises two connecting rods |
| 27 | lower starter roller |
| 32, 36 | driven rollers |
| 40.1, 40.2, ... | stationary deflecting rollers mounted at the stationary front housing 24 |
| 42, 44 | deflecting rollers mounted at the tailgate 22 |
| 46 | deflecting roller mounted at the bottom of the tailgate 22, forms one border of the wrapping material inlet 92 |
| 50.1, 50.2 | deflecting rollers for belt 51 |
| 51 | web conveying belt, guided around the rollers 50.1, 50.2 |
| 52.1, 52.2 | springs for deflecting rollers 50.1, 50.2 |
| 53.1 | rear lever arm for deflecting roller 50.1 |
| 53.2 | front lever arm for deflecting roller 50.2 |
| 54.1, 54.2 | rotating axes of the lever arms 53.1, 53.2 |
| 55.1, 55.2 | connecting elements between deflecting rollers 50.1, 50.2 and springs 52.1, 52.2 |
| 56 | connecting rod between net pusher 251 and rear lever arm 53.1 |
| 57 | guide for the front lever arm 53.2 |
| 58 | starter roller above the crop material inlet 90 |
| 72 | starter roller below the crop material inlet 90, forms one border of the wrapping material inlet 92 |
| 80 | pick-up unit |
| 81 | pick-up tines |
| 82 | pivotal tensioning arm with the rollers 84, 86, 88 |
| 82' | pivotal tensioning arm 82 in its uppermost position |
| 82" | pivotal tensioning arm 82 in its lowermost position |
| 84, 86, 88 | moveable deflecting rollers mounted at the tensioning arm 82 |
| 84', 86', 88' | moveable deflecting rollers 84, 86, 88 in their uppermost positions |
| 84", 86", 88" | moveable deflecting rollers 84, 86, 88 in their lowermost positions |
| 90 | crop material inlet, positioned between the starter rollers 58 and 72 |
| 92 | wrapping material inlet, positioned between the starter roller 72 and the deflecting roller 46 |
| 94 | pivoting axis of the tailgate 22 |
| 98 | curved web guide below the wrapping material inlet 92 |
| 100 | web guiding device, comprises the web conveying belt 51 and the belt deflecting rollers 50.1, 50.2 |
| 200 | bale to be wrapped |
| 250 | wrapping apparatus, comprises the net pusher 251, the driver 460, the knife 400, and the reel 302 |
| 251 | moveable net pusher, comprises the pusher pan 420 and the holder 426 |
| 300 | leading edge of web 304 of wrapping material |
| 302 | reel with wrapping material |
| 304 | web of wrapping material, pulled from the reel 302 |
| 400 | knife for severing the web 304, mounted at the driver 460 |
| 404 | spring |
| 420 | pusher pan of net pusher 251 |
| 422 | pivot tube, pivoting axis for net pusher 251 |
| 424 | slot in holder 426 of net pusher 251 |
| 426 | pivotal pusher holder for pusher pan 420 |
| 440 | net spreader roll, spreads the web 304 when the net pusher 251 is in the web touching position |
| 460 | driver for net pusher 251, pivotal around tube 462 |
| 462 | pivot tube, pivoting axis for driver 460 |
| 464 | pin at driver 460, can engage into slot 424 |
| 470 | cross member of driver 460 |
| L.I | lower line of the required aperture for ejecting the bale 200 |
| L.u | upper line of the required aperture for ejecting the bale 200 |
| TD | traveling direction of the baler |

## Claims

1. Bale forming and wrapping apparatus comprising
- a bale forming means (20, 82) providing a bale forming chamber (Ch, Ch') and
- a web guiding device (100) positioned outside of the bale forming chamber (Ch, Ch'),
wherein the web guiding device (100) is moveable between
- a conveying position and
- at least one parking position,
wherein the bale forming means (20, 82) is arranged to form a bale (200) in the provided bale forming chamber (Ch, Ch'),
wherein a gap between
- the web guiding device (100) being in the or one parking position and
- the bale forming means (20, 82)
occurs,
wherein
- the web guiding device (100) being in the conveying position and
- the bale forming means (20, 82)
are arranged
- to clamp a web (304) of wrapping material between them and
- to jointly convey the clamped web (304) towards an inlet (92) which guides into the bale forming chamber (Ch, Ch'),
wherein the bale forming and wrapping apparatus is arranged
- to insert the conveyed web (304) of wrapping material through the inlet (92) into the bale forming chamber (Ch, Ch') and
- to wrap the bale (200) in the bale forming chamber (Ch, Ch') into the inserted web (304),
**characterized in that**
the bale forming and wrapping apparatus further comprises
- a web processing member (251) being moveable between a web touching position and at least one remote position,
- a web processing member actuator (460) and
- a mechanical guiding device coupling member (53.1, 53.2, 56),
wherein the web processing member (251) being in the web touching position
- touches the web (304) of wrapping material and
- is arranged to process the touched web (304) of wrapping material,
wherein a gap occurs between
- the web (304) and
- the web processing member (251) being in the or one remote position,
wherein the web processing member actuator (460) is arranged to move the web processing member (251) at least
- from a start position being either the or one remote position or the web touching position
- into an end position being the or one other position, and
wherein the mechanical guiding device coupling member (53.1, 53.2, 56) couples
- a movement of the web processing member (251) from the start position into the end position with
- a movement of the web guiding device (100) from the or one parking position into the conveying position.

2. Bale forming and wrapping apparatus according to claim 1,
**characterized in that**
the bale forming and wrapping apparatus comprises a conveying device biasing member (52.1, 52.2),
wherein the conveying device biasing member (52.1, 52.2) tends to bias the web guiding device (100) into the or one parking position and
wherein the web guiding device (100) is moveable into the conveying position against the force of the conveying device biasing member (52.1, 52.2).

3. Bale forming and wrapping apparatus according to one of the preceding claims,
**characterized in that**
the web guiding device (100) being in the conveying position tends to press a web (304) of wrapping material against the bale forming means (20, 82) such that the web (304) is clamped.

4. Bale forming and wrapping apparatus according to one of the preceding claims,
**characterized in that**
the web guiding device (100) comprises a guiding sheet being moveable between a conveying position and at least one remote position and
the bale forming means comprises at least one pressing belt (20),
wherein the web guiding sheet being in the conveying position is arranged to press a web (304) of wrapping material against the or at least one pressing belt (20).

5. Bale forming and wrapping apparatus according to one of the preceding claims,
**characterized in that**
the mechanical guiding device coupling member (53.1, 53.2, 56) couples
- a movement of the web processing member (251) from the or one remote position serving as the start position into the web touching position serving as the end position with
- a movement of the web guiding device (100) from the or one parking position into the conveying position.

6. Bale forming and wrapping apparatus according to one of the preceding claims,
**characterized in that**
the web processing member (251) being in the web touching position is arranged to convey the web (304) of wrapping material.

7. Bale forming and wrapping apparatus according to one of the preceding claims,
**characterized in that**
the mechanical guiding device coupling member (53.1, 53.2, 56) couples
- a movement of the web processing member (251) from the web touching position serving as the start position into the or one remote position serving as the end position with
- a movement of the web guiding device (100) from the or one parking position into the conveying position.

8. Bale forming and wrapping apparatus according to one of the preceding claims,
**characterized in that**
the bale forming and wrapping apparatus comprises a severing device (400, 470) with a moveable severing device part (470),
wherein the moveable severing device part (470) belongs to the web processing member (251) and is moveable between at least one remote position and a severing position,
wherein the severing device (400, 470) with the moveable severing device part (470) being in the severing position is arranged to sever a web (304) of wrapping material,
wherein the mechanical guiding device coupling member (53.1, 53.2, 56) couples
- a movement of the moveable severing device part (470) from the severing position serving as the start position into the or one remote position serving as the end position with
- a movement of the web guiding device (100) from the or one parking position into the conveying position.

9. Bale forming and wrapping apparatus according to one of the claims 1 to 7,
**characterized in that**
a movable part (470) of the web processing member (251) belongs to a severing device (400, 470) for a web (304) of wrapping material,
wherein the severing device (400, 470) is arranged to sever the web (304) by a movement of the web processing member (251)
- from the or one remote position
- into the web touching position and
wherein the mechanical guiding device coupling member (53.1, 53.2, 56) couples
- a movement of the severing device part (470) from the or one remote position serving as the start position into the web touching position serving as the end position with
- a movement of the web guiding device (100) from the conveying position into the or one parking position.

10. Bale forming and wrapping apparatus according to one of the preceding claims,
**characterized in that**
the web processing member (251) comprises a driven roller being moveable between a web touching position and at least one remote position,
wherein the driven roller being in the web touching position is arranged to convey the web (304) of wrapping material and
wherein a distance between the driven roller being in the or one remote position and the web (304) occurs.

11. Bale forming and wrapping apparatus according to one of the preceding claims,
**characterized in that**
the web processing member (251) comprises a roller
wherein the roller of the web processing member (251) being in the web touching position tends to tension the web (304) of wrapping material.

12. Bale forming and wrapping apparatus according to one of the preceding claims,
**characterized in that**
the bale forming and wrapping apparatus comprises a casing (22, 24),
wherein the casing comprises
- a discharge gate (22) and
- a further casing part (24),
wherein the web guiding device (100) is mounted at the discharge gate (22),
wherein the discharge gate (22) is movable between
- a bale forming position and
- a bale ejecting position,
wherein the discharge gate (22) being in the bale forming position and the further casing part (24) together partially surround the bale forming means (20, 82) and thereby the bale forming chamber (Ch, Ch'),
wherein an aperture (L.I, L.u) for ejecting a bale (200) out of the bale forming chamber (Ch, Ch') is provided between
- the discharge gate (22) being in the bale ejecting position and
- the further casing part (24).

13. Bale forming and wrapping apparatus according to claim 12,
**characterized in that**
the discharge gate (22) comprises
- an adjacent discharge gate part (11) and
- a further discharge gate part (12, 13),
wherein the adjacent discharge gate part (11) is positioned between
- the further casing part (24) and
- the further discharge gate part (12, 13),
wherein the web guiding device (100) is mounted at the further discharge gate part (12, 13), and
wherein the adjacent discharge gate part (11) is movable with respect to the further discharge gate part (12, 13) away from the further casing part (24), thereby enabling folding together the discharge gate (22), when moving the discharge gate (22) into the bale ejecting position.

14. Bale forming and wrapping apparatus according to one of the preceding claims,
**characterized in that**
the web guiding device (100) comprises a conveying belt (51) being moveable between a conveying position and at least one remote position,
wherein the bale forming means (20, 82) and the web conveying belt (51) are arranged to clamp and jointly convey the web (304) when the web guiding device (100) is in the conveying position and
wherein a distance between the web conveying belt (51) being in the or one remote position and the bale forming means (20, 82) occurs.

15. Bale forming and wrapping apparatus according to claim 14,
**characterized in that**
the web guiding device (100) further comprises at least two belt deflecting rollers (50.1, 50.2),
wherein the web conveying belt (51) is guided around the belt deflecting rollers (50.1, 50.2),
wherein at least one belt deflecting roller (50.1, 50.2) is moveable between
- a conveying position and
- at least one remote position and
wherein the mechanical guiding device coupling member (53.1, 53.2, 56) is connected with at least one belt deflecting roller (50.1, 50.2).

16. Method for forming and wrapping a bale (200)
by using a bale forming and wrapping apparatus comprising
- a bale forming means (20, 82) providing a bale forming chamber (Ch, Ch') and
- a web guiding device (100) positioned outside of the bale forming chamber (Ch, Ch')
wherein the web guiding device (100) is moveable between
- a conveying position and
- at least one parking position,
wherein the method comprises the steps that
- the bale forming means (20, 82) forms a bale (200) in the provided bale forming chamber (Ch, Ch') while the web guiding device (100) is in the or one parking position,
- the web guiding device (100) is moved into the conveying position,
- the web guiding device (100) in the conveying position and the bale forming means (20, 82) clamp a web (304) of wrapping material between them and jointly convey the clamped web (304) towards an inlet (92) which guides into the bale forming chamber (Ch, Ch'),
- the conveyed web (304) is inserted through the inlet (92) into the bale forming chamber (Ch, Ch') and
- the bale (200) in the bale forming chamber (Ch, Ch') is wrapped into the inserted web (304),
**characterized in that**
the bale forming and wrapping apparatus further comprises
- a moveable web processing member (251) being moveable between a web touching position and at least one remote position,
- a web processing member actuator (460) and
- a mechanical guiding device coupling member (53.1, 53.2, 56),
wherein a gap occurs between
- the web (304) and
- the web processing member (251) being in the or one remote position,
wherein the step that the web guiding device (100) is moved into the conveying position
comprises the steps that
- the web processing member actuator (460) moves the web processing member (251) from a start position being either the or one remote position or the web touching position into an end position being the or one other position and
- the mechanical guiding device coupling member (53.1, 53.2, 56) transfers this movement onto the web guiding device (100)
such that the web guiding device (100) is moved from the or one parking position into the conveying position, and
wherein the method comprises the further step that the web processing member (251) being in the web touching position
- touches the web (304) of wrapping material and
- processes the touched web (304) of wrapping material.

17. Bale forming method according to claim 16,
**characterized in that**
the bale forming and wrapping apparatus further comprises a casing (22, 24),
wherein the casing (22, 24) comprises
- a movable discharge gate (22) and
- a further casing part (24),
wherein the web guiding device (100) is mounted at the discharge gate (22),
wherein the discharge gate (22) being in a bale forming position and the further casing part (24) together partially surround the bale forming means (20, 82) and thereby the bale forming chamber (Ch, Ch')
while the steps that
- the bale forming means (20, 82) forms the bale (200),
- the web guiding device (100) is moved into the conveying position,
- the web guiding device (100) in the conveying position and the bale forming means (20, 82) together convey the web (304) towards the inlet (92),
- the conveyed web (304) is inserted into the bale forming chamber (Ch, Ch'), and
- the bale (200) in the bale forming chamber (Ch, Ch') is wrapped are performed while the discharge gate (22) is in the bale forming position and
wherein the further steps are performed that
- the discharge gate (22) carrying the web guiding device (100) is moved away from the further casing part (24) into a bale ejecting position such that an aperture (L.I, L.u) between the discharge gate (22) being in the bale ejecting position and the further casing part (24) is provided and
- the bale (200) is ejected out of the bale forming chamber (Ch, Ch') through the provided aperture (L.I, L.u).

18. Bale forming method according to claim 17,
**characterized in that**
the discharge gate (22) comprises
- an adjacent discharge gate part (11) and
- a further discharge gate part (12, 13),
wherein the web guiding device (100) is mounted at the further discharge gate part (12, 13),
wherein the adjacent discharge gate part (11) is positioned between
- the further casing part (24) and
- the further discharge gate part (12, 13),
wherein the step that the discharge gate (22) is moved into the bale ejecting position comprises the steps that
- the further discharge gate part (12, 13) carrying the web guiding device (100) is moved away from the further casing part (24) and
- the adjacent discharge gate part (11) is moved with respect to the further discharge gate part (12, 13) away from the further casing part (24) such that the provided aperture (L.I, L.u) is enlarged.

## Patentansprüche

1. Vorrichtung zum Formen und Einwickeln von Ballen, mit:
- einem Ballenformmittel (20, 82), das eine Ballenformkammer (Ch, Ch') bereitstellt und
- einer Bahnführungsvorrichtung (100), die außerhalb der Ballenformkammer (Ch, Ch') angeordnet ist,
wobei die Bahnführungsvorrichtung (100) zwischen
- einer Förderstellung und
- mindestens einer Parkstellung
beweglich ist,
wobei das Ballenformmittel (20, 82) angeordnet ist, um einen Ballen (200) in der bereitgestellten Ballenformkammer (Ch, Ch') zu formen,
wobei eine Lücke zwischen
- der sich in der oder einer Parkstellung befindenden Bahnführungsvorrichtung (100) und
- dem Ballenformmittel (20, 82)
auftritt,
wobei
- die sich in der Förderstellung befindende Bahnführungsvorrichtung (100) und
- das Ballenformmittel (20, 82)
angeordnet sind, um
- eine Bahn (304) von Einwickelmaterial zwischen ihnen einzuklemmen und
- die eingeklemmte Bahn (304) gemeinsam in Richtung eines Einlasses (92) zu fördern, der in die Ballenformkammer (Ch, Ch') führt,
wobei die Vorrichtung zum Formen und Einwickeln von Ballen angeordnet ist, um
- die geförderte Bahn (304) von Einwickelmaterial durch den Einlass (92) in die Ballenformkammer (Ch, Ch') einzubringen und
- den Ballen (200) in der Ballenformkammer (Ch, Ch') in der eingebrachten Bahn (304) einzuwickeln,
**dadurch gekennzeichnet, dass**
die Vorrichtung zum Formen und Einwickeln von Ballen weiterhin das Folgende aufweist:
- ein Bahnverarbeitungselement (251), das zwischen einer Bahnberührungsstellung und mindestens einer entfernten Stellung beweglich ist,
- einen Bahnverarbeitungselementaktuator (460) und
- ein mechanisches Führungsvorrichtung-Kopplungselement (53.1, 53.2, 56),
wobei das sich in der Bahnberührungsstellung befindende Bahnverarbeitungselement (251)
- die Bahn (304) von Einwickelmaterial berührt und
- angeordnet ist, um die berührte Bahn (304) von Einwickelmaterial zu verarbeiten, wobei eine Lücke zwischen
- der Bahn (304) und
- dem sich in der oder einer entfernten Stellung befindenden Bahnverarbeitungselement (251)
auftritt,
wobei der Bahnverarbeitungselementaktuator (460) angeordnet ist, um das Bahnverarbeitungselement (251) mindestens
- von einer Startstellung, die entweder die oder eine entfernte Stellung oder die Bahnberührungsstellung ist
- in eine Endstellung zu bewegen, die die oder eine andere Stellung ist, und
wobei das mechanische Führungsvorrichtung-Kopplungselement (53.1, 53.2, 56)
- eine Bewegung des Bahnverarbeitungselements (251) von der Startstellung in die Endstellung mit
- einer Bewegung der Bahnführungsvorrichtung (100) von der oder einer Parkstellung in die Förderstellung
koppelt.

2. Vorrichtung zum Formen und Einwickeln von Ballen nach Anspruch 1, **dadurch gekennzeichnet, dass**
die Vorrichtung zum Formen und Einwickeln von Ballen ein Fördervorrichtung-Beaufschlagungselement (52.1, 52.2) aufweist,
wobei das Fördervorrichtung-Beaufschlagungselement (52.1, 52.2) die Bahnführungsvorrichtung (100) in Richtung der oder einer Parkstellung beaufschlagt und
wobei die Bahnführungsvorrichtung (100) gegen die Kraft des Fördervorrichtung-Beaufschlagungselements (52.1, 52.2) in die Förderstellung beweglich ist.

3. Vorrichtung zum Formen und Einwickeln von Ballen nach mindestens einem der vorhergehenden Ansprüche, **dadurch gekennzeichnet, dass**
die sich in der Förderstellung befindende Bahnführungsvorrichtung (100) eine Bahn (304) von Einwickelmaterial so tendenziell gegen das Ballenformmittel (20, 82) drückt, dass die Bahn (304) eingeklemmt wird.

4. Vorrichtung zum Formen und Einwickeln von Ballen nach mindestens einem der vorhergehenden Ansprüche, **dadurch gekennzeichnet, dass**
die Bahnführungsvorrichtung (100) mindestens eine Führungsplatte aufweist, die zwischen einer Förderstellung und mindestens einer entfernten Stellung beweglich ist und
das Ballenformmittel mindestens ein Druckband (20) aufweist,
wobei die sich in der Förderstellung befindende Bahnführungsplatte angeordnet ist, um eine Bahn (304) von Einwickelmaterial gegen das oder mindestens eine Druckband (20) zu drücken.

5. Vorrichtung zum Formen und Einwickeln von Ballen nach mindestens einem der vorhergehenden Ansprüche, **dadurch gekennzeichnet, dass**
das mechanische Führungsvorrichtung-Kopplungselement (53.1, 53.2, 56)
- eine Bewegung des Bahnverarbeitungselements (251) von der oder einer entfernten Stellung als Startstellung in die Bahnberührungsstellung als Endstellung mit
- einer Bewegung der Bahnführungsvorrichtung (100) von der oder einer Parkstellung in die Förderstellung
koppelt.

6. Vorrichtung zum Formen und Einwickeln von Ballen nach mindestens einem der vorhergehenden Ansprüche **dadurch gekennzeichnet, dass**
das sich in der Bahnberührungsstellung befindende Bahnverarbeitungselement (251) angeordnet ist, um die Bahn (304) von Einwickelmaterial zu fördern.

7. Vorrichtung zum Formen und Einwickeln von Ballen nach mindestens einem der vorhergehenden Ansprüche, **dadurch gekennzeichnet, dass**
das mechanische Führungsvorrichtung-Kopplungselement (53.1, 53.2, 56)
- eine Bewegung des Bahnverarbeitungselements (251) von der Bahnberührungsstellung als Startstellung in die oder eine entfernte Stellung als Endstellung mit
- einer Bewegung der Bahnführungsvorrichtung (100) von der oder einer Parkstellung in die Förderstellung
koppelt.

8. Vorrichtung zum Formen und Einwickeln von Ballen nach mindestens einem der vorhergehenden Ansprüche, **dadurch gekennzeichnet, dass**
die Vorrichtung zum Formen und Einwickeln von Ballen eine Abtrennvorrichtung (400, 470) mit einem beweglichen Abtrennvorrichtungsteil (470) aufweist,
wobei das bewegliche Abtrennvorrichtungsteil (470) zu dem Bahnverarbeitungselement (251) gehört und zwischen mindestens einer entfernten Stellung und einer Abtrennstellung beweglich ist,
wobei die Abtrennvorrichtung (400, 470) mit dem sich in der Abtrennstellung befindenden beweglichen Abtrennvorrichtungsteil (470) angeordnet ist, um eine Bahn (304) von Einwickelmaterial abzutrennen,
wobei das mechanische Führungsvorrichtung-Kopplungselement (53.1, 53.2, 56)
- eine Bewegung des beweglichen Abtrennvorrichtungsteils (470) von der Abtrennstellung als Startstellung in die oder eine entfernte Stellung als Endstellung mit
- einer Bewegung der Bahnführungsvorrichtung (100) von der oder einer Parkstellung in die Förderstellung
koppelt.

9. Vorrichtung zum Formen und Einwickeln von Ballen nach mindestens einem der Ansprüche 1-7, **dadurch gekennzeichnet, dass**
ein bewegliches Teil (470) des Bahnverarbeitungselements (251) zu einer Abtrennvorrichtung (400, 470) für eine Bahn (304) von Einwickelmaterial gehört,
wobei die Abtrennvorrichtung (400, 470) zum Abtrennen der Bahn (304) durch eine Bewegung des Bahnverarbeitungselements (251)
- von der oder einer entfernten Stellung
- in die Bahnberührungsstellung
angeordnet ist und
wobei das mechanische Führungsvorrichtung-Kopplungselement (53.1, 53.2, 56)
- eine Bewegung des Abtrennvorrichtungsteils (470) von der oder einer entfernten Stellung als Startstellung in die Bahnberührungsstellung als Endstellung mit
- einer Bewegung der Bahnführungsvorrichtung (100) von der Förderstellung in die oder eine Parkstellung
koppelt.

10. Vorrichtung zum Formen und Einwickeln von Ballen nach mindestens einem der vorhergehenden Ansprüche, **dadurch gekennzeichnet, dass**
das Bahnverarbeitungselement (251) eine angetriebene Rolle aufweist, die zwischen einer Bahnberührungsstellung und mindestens einer entfernten Stellung beweglich ist,
wobei die sich in der Bahnberührungsstellung befindende angetriebene Rolle angeordnet ist, um die Bahn (304) von Einwickelmaterial zu fördern und
wobei ein Abstand zwischen der sich in der oder einer entfernten Stellung befindenden angetriebenen Rolle und der Bahn (304) auftritt.

11. Vorrichtung zum Formen und Einwickeln von Ballen nach mindestens einem der vorhergehenden Ansprüche, **dadurch gekennzeichnet, dass**
das Bahnverarbeitungselement (251) eine Rolle aufweist,
wobei die sich in der Bahnberührungsstellung befindende Rolle des Bahnverarbeitungselements (251) die Bahn (304) von Einwickelmaterial tendenziell spannt.

12. Vorrichtung zum Formen und Einwickeln von Ballen nach mindestens einem der vorhergehenden Ansprüche, **dadurch gekennzeichnet, dass**
die Vorrichtung zum Formen und Einwickeln von Ballen ein Gehäuse (42, 24) aufweist,
wobei das Gehäuse
- ein Auslasstor (22) und
- ein weiteres Gehäuseteil (24)
aufweist,
wobei die Bahnführungsvorrichtung (100) an dem Auslasstor (22) montiert ist,
wobei das Auslasstor (22) zwischen
- einer Ballenformstellung und
- einer Ballenauswurfstellung
beweglich ist,
wobei das sich in der Ballenformstellung befindende Auslasstor (22) und das weitere Gehäuseteil (24) gemeinsam das Ballenformmittel (20, 82) teilweise umschließen und dadurch die Ballenformkammer (Ch, Ch') bilden,
wobei eine Öffnung (L.l, L.u) zum Auswerfen eines Ballens (200) aus der Ballenformkammer (Ch, Ch') zwischen
- dem sich in der Ballenauswurfstellung befindenden Auslasstor (22) und
- dem weiteren Gehäuseteil (24)
bereitgestellt ist.

13. Vorrichtung zum Formen und Einwickeln von Ballen nach Anspruch 12, **dadurch gekennzeichnet, dass**
das Auslasstor (22)
- ein benachbartes Auslasstorteil (11) und
- ein weiteres Auslasstorteil (12, 13)
aufweist,
wobei das benachbarte Auslasstorteil (11) zwischen
- dem weiteren Gehäuseteil (24) und
- dem weiteren Auslasstorteil (12, 13)
angeordnet ist,
wobei die Bahnführungsvorrichtung (100) an dem weiteren Auslasstorteil (12, 13) montiert ist, und
wobei das benachbarte Auslasstorteil (11) relativ zu dem weiteren Auslasstorteil (12, 13) weg von dem weiteren Gehäuseteil (24) beweglich ist,
wodurch ein Zusammenfalten des Auslasstors (22) ermöglicht wird, wenn das Auslasstor (22) in die Ballenauswurfstellung bewegt wird.

14. Vorrichtung zum Formen und Einwickeln von Ballen nach mindestens einem der vorhergehenden Ansprüche, **dadurch gekennzeichnet, dass**
die Bahnführungsvorrichtung (100) ein Förderband (51) aufweist, das zwischen einer Förderstellung und mindestens einer entfernten Stellung beweglich ist,
wobei das Ballenformmittel (20, 82) und das Bahn-Förderband (51) angeordnet sind, um die Bahn (304) einzuklemmen und gemeinsam zu fördern, wenn sich die Bahnführungsvorrichtung (100) in der Förderstellung befindet und
wobei ein Abstand zwischen dem sich in der oder einer entfernten Stellung befindenden Bahn-Förderband (51) und dem Ballenformmittel (20, 82) auftritt.

15. Vorrichtung zum Formen und Einwickeln von Ballen nach Anspruch 14, **dadurch gekennzeichnet, dass**
die Bahnführungsvorrichtung (100) weiterhin mindestens zwei Bandumlenkrollen (50.1, 50.2) aufweist,
wobei das Bahn-Förderband (51) um die Bandumlenkrollen (50.1, 50.2) geführt wird,
wobei mindestens eine Bandumlenkrolle (50.1, 50.2) zwischen
- einer Förderstellung und
- mindestens einer entfernten Stellung
beweglich ist und
wobei das mechanische Führungsvorrichtung-Kopplungselement (53.1, 53.2, 56) mit mindestens einer Bandumlenkrolle (50.1, 50.2) verbunden ist.

16. Verfahren zum Formen und Einwickeln eines Ballens (200) unter Verwendung einer Vorrichtung zum Formen und Einwickeln von Ballen, mit:
- einem Ballenformmittel (20, 82), das eine Ballenformkammer (Ch, Ch') bereitstellt und
- einer Bahnführungsvorrichtung (100), die außerhalb der Ballenformkammer (Ch, Ch') angeordnet ist,
wobei die Bahnführungsvorrichtung (100) zwischen
- einer Förderstellung und
- mindestens einer Parkstellung
beweglich ist,
wobei das Verfahren die folgenden Schritte aufweist:
- das Ballenformmittel (20, 82) formt einen Ballen (200) in der bereitgestellten Ballenformkammer (Ch, Ch'), während sich die Bahnführungsvorrichtung (100) in der oder einer Parkstellung befindet,
- die Bahnführungsvorrichtung (100) wird in die Förderstellung bewegt,
- die sich in der Förderstellung befindende Bahnführungsvorrichtung (100) und das Ballenformmittel (20, 82) klemmen eine Bahn (304) von Einwickelmaterial zwischen sich ein und fördern die eingeklemmte Bahn (304) gemeinsam in Richtung eines Einlasses (92), der in die Ballenformkammer (Ch, Ch') führt,
- die geförderte Bahn (304) wird durch den Einlass (92) in die Ballenformkammer (Ch, Ch') eingebracht und
- der Ballen (200) in der Ballenformkammer (Ch, Ch') wird in der eingebrachten Bahn (304) eingewickelt
**dadurch gekennzeichnet, dass**
die Vorrichtung zum Formen und Einwickeln von Ballen weiterhin das Folgende aufweist:
- ein Bahnverarbeitungselement (251), das zwischen einer Bahnberührungsstellung und mindestens einer entfernten Stellung beweglich ist,
- einen Bahnverarbeitungselementaktuator (460) und
- ein mechanisches Führungsvorrichtung-Kopplungselement (53.1, 53.2, 56),
wobei eine Lücke zwischen
- der Bahn (304) und
- dem sich in der oder einer entfernten Stellung befindenden Bahnverarbeitungselement (251)
auftritt,
wobei der Schritt, dass die Bahnführungsvorrichtung (100) in die Förderstellung bewegt wird, die folgenden Schritte aufweist:
- der Bahnverarbeitungselementaktuator (460) bewegt das Bahnverarbeitungselement (251) von einer Startstellung, die entweder die oder eine entfernte Stellung oder die Bahnberührungsstellung ist, in eine Endstellung, die die oder eine andere Stellung ist, und
- das mechanische Führungsvorrichtung-Kopplungselement (53.1, 53.2, 56) überträgt diese Bewegung so auf die Bahnführungsvorrichtung (100), dass die Bahnführungsvorrichtung (100) von der oder einer Parkstellung in die Förderstellung bewegt wird, und
wobei das Verfahren den weiteren Schritt aufweist, dass das sich in der Bahnberührungsstellung befindende Bahnverarbeitungselement (251)
- die Bahn (304) von Einwickelmaterial berührt und
- die berührte Bahn (304) von Einwickelmaterial verarbeitet.

17. Verfahren zum Formen von Ballen nach Anspruch 16, **dadurch gekennzeichnet, dass** die Vorrichtung zum Formen und Einwickeln von Ballen ein Gehäuse (42, 24) aufweist,
wobei das Gehäuse
- ein bewegliches Auslasstor (22) und
- ein weiteres Gehäuseteil (24)
aufweist,
wobei die Bahnführungsvorrichtung (100) an dem Auslasstor (22) montiert ist,
wobei das sich in der Ballenformstellung befindende Auslasstor (22) und das weitere Gehäuseteil (24) gemeinsam das Ballenformmittel (20, 82) teilweise umschließen und dadurch die Ballenformkammer (Ch, Ch') bilden,
wobei die folgenden Schritte ausgeführt werden, während sich das Auslasstor (2) in der Ballenformstellung befindet:
- das Ballenformmittel (20, 82) formt den Ballen (200),
- die Bahnführungsvorrichtung (100) wird in die Förderstellung bewegt,
- die sich in der Förderstellung befindende Bahnführungsvorrichtung (100) und das Ballenformmittel (20, 82) fördern gemeinsam die Bahn (304) in Richtung des Einlasses (92),
- die geförderte Bahn (304) wird in die Ballenformkammer (Ch, Ch') eingebracht, und
- der Ballen (200) in der Ballenformkammer (Ch, Ch') wird eingewickelt,
und wobei die folgenden Schritte ausgeführt werden:
- das die Bahnführungsvorrichtung (100) tragende Auslasstor (22) wird von dem weiteren Gehäuseteil (24) weg in eine Ballenauswurfstellung so bewegt, dass eine Öffnung (L.l, L.u) zwischen dem sich in der Ballenauswurfstellung befindenden Auslasstor (22) und dem weiteren Gehäuseteil (24) bereitgestellt wird und
- der Ballen (200) wird durch die bereitgestellte Öffnung (L.l, L.u) aus der Ballenformkammer (Ch, Ch') ausgeworfen.

18. Verfahren zum Formen von Ballen nach Anspruch 17, **dadurch gekennzeichnet, dass** das Auslasstor (22)
- ein benachbartes Auslasstorteil (11) und
- ein weiteres Auslasstorteil (12, 13)
aufweist,
wobei die Bahnführungsvorrichtung (100) an dem weiteren Auslasstorteil (12, 13) montiert ist,
wobei das benachbarte Auslasstorteil (11) zwischen
- dem weiteren Gehäuseteil (24) und
- dem weiteren Auslasstorteil (12, 13)
angeordnet ist,
wobei der Schritt, dass das Auslasstor (22) in die Ballenauswurfstellung bewegt wird, die folgenden Schritte aufweist:
- das die Bahnführungsvorrichtung (100) tragende weitere Auslasstorteil (12, 13) wird von dem weiteren Gehäuseteil (24) weg bewegt und
- das benachbarte Auslasstorteil (11) wird relativ zu dem weiteren Auslasstorteil (12, 13) so weg von dem weiteren Gehäuseteil (24) bewegt, dass die bereitgestellte Öffnung (L.l, L.u) vergrößert wird.

## Revendications

1. Dispositif de formation et d'emballage de balle comprenant :
un moyen de formation de balle (20, 82) comportant un compartiment de formation de balle (Ch, Ch') et
un dispositif de guidage de bande (100) positionné à l'extérieur du compartiment de formation de balle (Ch, Ch'),
dans lequel le dispositif de guidage de bande (100) peut être déplacé entre une position de transfert et
au moins une position de stationnement,
dans lequel le moyen de formation de balle (20, 82) est agencé afin de former une balle (200) dans le compartiment de formation de balle (Ch, Ch') présent,
dans lequel un interstice est formé entre
le dispositif de guidage de bande (100) lorsqu'il est dans la ou une position de stationnement et
le moyen de formation de balle (20, 82),
dans lequel
le dispositif de guidage de bande (100), lorsqu'il est dans la position de transfert, et
le moyen de formation de balle (20, 82) sont agencés
afin de bloquer une bande (304) de matériau d'emballage entre eux et
de transférer simultanément la bande bloquée (304) vers une entrée (92) qui conduit dans le compartiment de formation de balle (Ch, Ch'),
dans lequel le dispositif de formation et d'emballage de balle est agencé de manière
à insérer la bande (304) de matériau d'emballage transférée à travers l'entrée (92) dans le compartiment de formation de balle (Ch, Ch') et
à envelopper la balle (200), dans le compartiment de formation de balle (Ch, Ch'), à l'intérieur de la bande (304) insérée,
**caractérisé en ce que**
le dispositif de formation et d'emballage de balle comprend, en outre :
un élément de traitement de bande (251) qui peut être déplacé entre une position de contact de bande et au moins une position distante,
un actionneur d'élément de traitement de bande (460) et
un élément de couplage de dispositif de guidage mécanique (53.1, 53.2, 56),
dans lequel l'élément de traitement de bande (251), lorsqu'il est dans la position de contact de bande,
est en contact avec la bande (304) de matériau d'emballage et
est agencé afin de traiter la bande en contact (304) de matériau d'emballage,
dans lequel un interstice est formé entre
la bande (304) et
l'élément de traitement de bande (251) lorsqu'il est dans la ou une position distante,
dans lequel l'actionneur d'élément de traitement de bande (460) est agencé afin de déplacer l'élément de traitement de bande (251) au moins
à partir d'une position initiale, qu'elle soit la ou une position distante ou la position de contact de bande
vers une position finale qui est la ou une autre position, et
dans lequel l'élément de couplage de dispositif de guidage mécanique (53.1, 53.2, 56) assure le couplage
d'un mouvement de l'élément de traitement de bande (251) à partir de la position initiale vers la position finale avec
un mouvement du dispositif de guidage de bande (100) à partir de la ou d'une position de stationnement vers la position de transfert.

2. Dispositif de formation et d'emballage de balle selon la revendication 1,
**caractérisé en ce que**
le dispositif de formation et d'emballage de balle comprend un élément d'application de dispositif de transfert (52.1, 52.2),
dans lequel l'élément d'application de dispositif de transfert (52.1, 52.2) a tendance à appliquer le dispositif de guidage de bande (100) vers la ou une première position de stationnement et
dans lequel le dispositif de guidage de bande (100) peut être déplacé vers la position de transfert contre l'effort de l'élément d'application de dispositif de transfert (52.1, 52.2).

3. Dispositif de formation et d'emballage de balle selon l'une des revendications précédentes,
**caractérisé en ce que**
le dispositif de guidage de bande (100), lorsqu'il est dans la position de transfert, a tendance à presser une bande (304) de matériau d'emballage contre le moyen de formation de balle (20, 82) de telle sorte que la bande (304) est bloquée.

4. Dispositif de formation et d'emballage de balle selon l'une des revendications précédentes,
**caractérisé en ce que**
le dispositif de guidage de bande (100) comprend une feuille de guidage qui peut être déplacée entre une position de transfert et au moins une position distante et
le moyen de formation de balle comprend au moins une bande de pression (20),
dans lequel la feuille de guidage de bande lorsqu'elle est dans la position de transfert est agencée de manière à presser une bande (304) de matériau d'emballage contre la au moins une bande de pression (20).

5. Dispositif de formation et d'emballage de balle selon l'une des revendications précédentes,
**caractérisé en ce que**
l'élément de couplage de dispositif de guidage mécanique (53.1, 53.2, 56) assure le couplage
d'un mouvement de l'élément de traitement de bande (251) à partir de la ou d'une position distante, en tant que position initiale dans la position de contact de bande servant de position finale avec
un mouvement du dispositif de guidage de bande (100) à partir de la ou d'une position de stationnement dans la position de transfert.

6. Dispositif de formation et d'emballage de balle selon l'une des revendications précédentes,
**caractérisé en ce que**
l'élément de traitement de bande (251), lorsqu'il est dans la position de contact de bande, est agencé de manière à déplacer la bande (304) de matériau d'emballage.

7. Dispositif de formation et d'emballage de balle selon l'une des revendications précédentes,
**caractérisé en ce que**
l'élément de couplage de dispositif de guidage mécanique (53.1, 53.2, 56) assure le couplage
d'un mouvement de l'élément de traitement de bande (251) à partir de la position de contact de bande servant de position initiale vers la ou une position distante servant de position finale avec
un mouvement du dispositif de guidage de bande (100) à partir de la ou d'une position de stationnement dans la position de transfert.

8. Dispositif de formation et d'emballage de balle selon l'une des revendications précédentes,
**caractérisé en ce que**
le dispositif de formation et d'emballage de balle comprend un dispositif de coupe (400, 470) avec une partie de dispositif de coupe mobile (470),
dans lequel la partie de dispositif de coupe mobile (470) appartient à l'élément de traitement de bande (251) et peut être déplacée entre au moins une position distante et une position de coupe,
dans lequel le dispositif de coupe (400, 470) avec la partie de dispositif de coupe mobile (470), lorsqu'elle est dans la position de coupe, est agencé de manière à couper une bande (304) de matériau d'emballage,
dans lequel l'élément de couplage de dispositif de guidage mécanique (53.1, 53.2, 56) assure le couplage
d'un mouvement de la partie de dispositif de coupe mobile (470) à partir de la position de coupe servant de position initiale dans la ou une position distante servant de position finale avec
un mouvement du dispositif de guidage de bande (100) à partir de la ou d'une position de stationnement vers la position de transfert.

9. Dispositif de formation et d'emballage de balle selon l'une des revendications 1 à 7,
**caractérisé en ce que**
une partie mobile (470) de l'élément de traitement de bande (251) appartient à un dispositif de coupe (400, 470) d'une bande (304) de matériau d'emballage,
dans lequel le dispositif de coupe (400, 470) est agencé de manière à couper la bande (304) par un mouvement de l'élément de traitement de bande (251)
à partir de la ou d'une position distante
vers la position de contact de bande et
dans lequel l'élément de couplage de dispositif de guidage mécanique (53.1, 53.2, 56) assure le couplage
d'un mouvement de la partie de dispositif de coupe (470) à partir de la ou d'une position distante servant de position initiale vers la position de contact de bande servant de position finale avec
un mouvement du dispositif de guidage de bande (100) à partir de la position de transfert vers la ou une position de stationnement.

10. Dispositif de formation et d'emballage de balle selon l'une des revendications précédentes,
**caractérisé en ce que**
l'élément de traitement de bande (251) comprend un rouleau entraîné qui peut être déplacé entre une position de contact de bande et au moins une position distante,
dans lequel le rouleau entraîné, lorsqu'il est dans la position de contact de bande, est agencé de manière à transporter la bande (304) de matériau d'emballage et
dans lequel une certaine distance entre le rouleau entraîné lorsqu'il est dans la ou une position distante et la bande (304) est assurée.

11. Dispositif de formation et d'emballage de balle selon l'une des revendications précédentes,
**caractérisé en ce que**
l'élément de traitement de bande (251) comprend un rouleau
dans lequel le rouleau de l'élément de traitement de bande (251), lorsqu'il est dans la position de contact de bande a tendance à tendre la bande (304) de matériau d'emballage.

12. Dispositif de formation et d'emballage de balle selon l'une des revendications précédentes,
**caractérisé en ce que**
le dispositif de formation et d'emballage de balle comprend un boîtier (22, 24),
dans lequel le boîtier comprend
une trappe de déchargement (22) et
une partie de boîtier supplémentaire (24),
dans lequel le dispositif de guidage de bande (100) est monté au niveau de la trappe de déchargement (22),
dans lequel la trappe de déchargement (22) peut être déplacée entre
une position de formation de balle et
une position d'éjection de balle,
dans lequel la trappe de déchargement (22) lorsqu'elle est dans la position de formation de balle et la partie de boîtier supplémentaire (24) encerclent ensemble partiellement le moyen de formation de balle (20, 82) et ainsi le compartiment de formation de balle (Ch, Ch'),
dans lequel une ouverture (L.l, L.u) destinée à éjecter une balle (200) hors du compartiment de formation de balle (Ch, Ch') est formée entre
la trappe de déchargement (22) lorsqu'elle est dans la position d'éjection de balle et
la partie de boîtier supplémentaire (24).

13. Dispositif de formation et d'emballage de balle selon la revendication 12, **caractérisé en ce que**
la trappe de déchargement (22) comprend
une partie de trappe de déchargement adjacente (11) et
une partie de trappe de déchargement supplémentaire (12, 13),
dans lequel la partie de trappe de déchargement adjacente (11) est positionnée entre
la partie de boîtier supplémentaire (24) et
la partie de trappe de déchargement supplémentaire (12, 13),
dans lequel le dispositif de guidage de bande (100) est monté au niveau de la partie de trappe de déchargement supplémentaire (12, 13), et
dans lequel la partie de trappe de déchargement adjacente (11) peut être déplacée par rapport à la partie de trappe de déchargement supplémentaire (12, 13) à l'écart de la partie de boîtier supplémentaire (24),
permettant ainsi de replier la trappe de déchargement (22), lors du déplacement de la trappe de déchargement (22) dans la position d'éjection de balle.

14. Dispositif de formation et d'emballage de balle selon l'une des revendications précédentes,
**caractérisé en ce que**
le dispositif de guidage de bande (100) comprend une courroie de transfert (51) qui peut être déplacée entre une position de transfert et au moins une position distante,
dans lequel le moyen de formation de balle (20, 82) et la courroie de transfert de bande (51) sont agencés afin de bloquer et de transférer simultanément la bande (304) lorsque le dispositif de guidage de bande (100) est dans la position de transfert et
dans lequel une certaine distance entre la courroie de transfert de bande (51) lorsqu'elle est dans la ou une position distante et le moyen de formation de balle (20, 82) est assurée.

15. Dispositif de formation et d'emballage de balle selon la revendication 14,
**caractérisé en ce que**
le dispositif de guidage de bande (100) comprend, en outre, au moins deux rouleaux de détournement de courroie (50.1, 50.2),
dans lequel la courroie de transfert de bande (51) est guidée autour des rouleaux de détournement de courroie (50.1, 50.2),
dans lequel au moins un rouleau de détournement de courroie (50.1, 50.2) peut être déplacé entre
une position de transfert et
au moins une position distante et
dans lequel l'élément de couplage de dispositif de guidage mécanique (53.1, 53.2, 56) est relié à au moins un rouleau de détournement de courroie (50.1, 50.2).

16. Procédé de formation et d'emballage de balle (200) en utilisant un dispositif de formation et d'emballage de balle comprenant :
un moyen de formation de balle (20, 82) comportant un compartiment de formation de balle (Ch, Ch') et
un dispositif de guidage de bande (100) positionné à l'extérieur du compartiment de formation de balle (Ch, Ch')
dans lequel le dispositif de guidage de bande (100) peut être déplacé entre
une position de transfert et
au moins une position de stationnement,
dans lequel le procédé comprend les étapes dans lesquelles
le moyen de formation de balle (20, 82) forme une balle (200) dans le compartiment de formation de balle (Ch, Ch') présent alors que le dispositif de guidage de bande (100) est dans la ou une position de stationnement,
le dispositif de guidage de bande (100) est déplacé dans la position de transfert,
le dispositif de guidage de bande (100) dans la position de transfert et le moyen de formation de balle (20, 82) bloquent une bande (304) de matériau d'emballage entre eux et transfèrent conjointement la bande (304) bloquée vers une entrée (92) qui assure le guidage dans le compartiment de formation de balle (Ch, Ch'),
la bande (304) transférée est insérée à travers l'entrée (92) dans le compartiment de formation de balle (Ch, Ch') et
la balle (200) dans le compartiment de formation de balle (Ch, Ch') est emballée dans la bande (304) insérée,
**caractérisé en ce que**
le dispositif de formation et d'emballage de balle comprend, en outre :
un élément de traitement de bande (251) mobile qui peut être déplacé entre une position de contact de bande et au moins une position distante,
un actionneur d'élément de traitement de bande (460) et
un élément de couplage de dispositif de guidage mécanique (53.1, 53.2, 56),
dans lequel un interstice est présent entre
la bande (304) et
l'élément de traitement de bande (251) lorsqu'il est dans la ou une position distante,
dans lequel l'étape dans laquelle le dispositif de guidage de bande (100) est déplacé dans la position de transfert
comprend les étapes dans lesquelles
l'actionneur d'élément de traitement de bande (460) déplace l'élément de traitement de bande (251) à partir d'une position initiale qui est soit la ou une position distante soit la position de contact de bande vers une position finale qui est la ou une autre position et
l'élément de couplage de dispositif de guidage mécanique (53.1, 53.2, 56) transfère ce mouvement sur le dispositif de guidage de bande (100)
de telle sorte que le dispositif de guidage de bande (100) est déplacé à partir de la ou d'une position de stationnement vers la position de transfert, et
dans lequel le procédé comprend l'étape supplémentaire dans laquelle l'élément de traitement de bande (251), lorsqu'il est dans la position de contact de bande,
entre en contact avec la bande (304) de matériau d'emballage et
traite la bande (304) de matériau d'emballage en contact avec ce dernier.

17. Procédé de formation de balle selon la revendication 16, **caractérisé en ce que**
le dispositif de formation et d'emballage de balle comprend, en outre, un boîtier (22, 24),
dans lequel le boîtier (22, 24) comprend
une trappe de déchargement mobile (22) et
une partie de boîtier supplémentaire (24),
dans lequel le dispositif de guidage de bande (100) est monté au niveau de la trappe de déchargement (22),
dans lequel la trappe de déchargement (22), lorsqu'elle est dans une position de formation de balle, et la partie de boîtier supplémentaire (24) encerclent ensemble partiellement le moyen de formation de balle (20, 82), et ainsi, le compartiment de formation de balle (Ch, Ch'),
alors que les étapes dans lesquelles
le moyen de formation de balle (20, 82) forme la balle (200),
le dispositif de guidage de bande (100) est déplacé dans la position de transfert,
le dispositif de guidage de bande (100) dans la position de transfert et le moyen de formation de balle (20, 82) transfèrent ensemble la bande (304) vers l'entrée (92),
la bande (304) transférée est insérée dans le compartiment de formation de balle (Ch, Ch'), et
la balle (200) dans le compartiment de formation de balle (Ch, Ch') est emballée
sont réalisées alors que la trappe de déchargement (22) est dans la position de formation de balle et
dans lequel les étapes supplémentaires suivantes sont exécutées
la trappe de déchargement (22) transportant le dispositif de guidage de bande (100) est déplacée à l'écart de la partie de boîtier supplémentaire (24) vers une position d'éjection de balle
de telle sorte qu'une ouverture (L.l, L.u) entre la trappe de déchargement (22) qui est dans la position d'éjection de balle et la partie de boîtier supplémentaire (24) est formée et
la balle (200) est éjectée hors du compartiment de formation de balle (Ch, Ch') à travers l'ouverture formée (L.l, L.u).

18. Procédé de formation de balle selon la revendication 17,
**caractérisé en ce que**
la trappe de déchargement (22) comprend
une partie de trappe de déchargement adjacente (11) et
une partie de trappe de déchargement supplémentaire (12, 13),
dans lequel le dispositif de guidage de bande (100) est monté au niveau de la partie de trappe de déchargement supplémentaire (12, 13),
dans lequel la partie de trappe de déchargement adjacente (11) est positionnée entre
la partie de boîtier supplémentaire (24) et
la partie de trappe de déchargement supplémentaire (12, 13),
dans lequel l'étape dans laquelle la trappe de déchargement (22) est déplacée vers la position d'éjection de balle comprend les étapes dans lesquelles
la partie de trappe de déchargement supplémentaire (12, 13) transportant le dispositif de guidage de bande (100) est déplacée à l'écart de la partie de boîtier supplémentaire (24) et
la partie de trappe de déchargement adjacente (11) est déplacée par rapport à la partie de trappe de déchargement supplémentaire (12, 13) à l'écart de la partie de boîtier supplémentaire (24)
de telle sorte que l'ouverture formée (L.l, L.u) est élargie.
